(19) Europäisches Patentamt / European Patent Office / Office européen des brevets

(11) **EP 3 340 170 B1**

(12) **EUROPEAN PATENT SPECIFICATION**

(45) Date of publication and mention of the grant of the patent:
**17.07.2019 Bulletin 2019/29**

(21) Application number: **16850213.6**

(22) Date of filing: **19.08.2016**

(51) Int Cl.:
**G06T 5/50** (2006.01)      **G06T 17/00** (2006.01)

(86) International application number:
**PCT/CN2016/096087**

(87) International publication number:
**WO 2017/054589 (06.04.2017 Gazette 2017/14)**

(54) **MULTI-DEPTH IMAGE FUSION METHOD AND APPARATUS**

VERFAHREN UND VORRICHTUNG ZUR MEHRFACHTIEFENBILDFUSION

PROCÉDÉ ET APPAREIL DE FUSION D'IMAGES À PROFONDEURS MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2015 CN 201510644681**

(43) Date of publication of application:
**27.06.2018 Bulletin 2018/26**

(73) Proprietors:
• **Huawei Technologies Co., Ltd.
Longgang District
Shenzhen, Guangdong 518129 (CN)**
• **Fraunhofer-Gesellschaft zur Förderung der angewandten Forschung e.V.
80686 München (DE)**

(72) Inventors:
• **XI, Ming
Shenzhen
Guangdong 518129 (CN)**
• **EBEL, Sascha
Shenzhen, Guangdong 518129 (DE)**
• **SCHREER, Oliver
10587 Berlin (DE)**
• **FELDMANN, Ingo
10587 Berlin (DE)**

(74) Representative: **Gill Jennings & Every LLP
The Broadgate Tower
20 Primrose Street
London EC2A 2ES (GB)**

(56) References cited:
EP-A1- 2 538 242          WO-A2-02/01502
WO-A2-2014/080330          CN-A- 101 964 117
CN-A- 103 198 473          CN-A- 103 248 911
CN-A- 103 581 648          CN-A- 104 346 608
CN-A- 105 374 019          US-A1- 2011 200 249
US-A1- 2014 177 915

• DUAN YONG ET AL: "A real-time system for 3D recovery of dynamic scene with multiple RGBD imagers", COMPUTER VISION AND PATTERN RECOGNITION WORKSHOPS (CVPRW), 2011 IEEE COMPUTER SOCIETY CONFERENCE ON, IEEE, 20 June 2011 (2011-06-20), pages 1-8, XP031926464, DOI: 10.1109/CVPRW.2011.5981680 ISBN: 978-1-4577-0529-8

• PAUL MERRELL ET AL: "Real-Time Visibility-Based Fusion of Depth Maps", ICCV 2007. IEEE 11TH INTERNATIONAL CONFERENCE ON COMPUTER VISION, 2007, IEEE, October 2007 (2007-10), pages 1-8, XP031194473, ISBN: 978-1-4244-1630-1

## Description

## TECHNICAL FIELD

The present invention relates to the field of image processing technologies, and in particular, to a method and an apparatus for fusing a plurality of depth images.

## BACKGROUND

A technology for fusing a plurality of depth images is a technology for fusing a plurality of depth images of a same scene at different viewing angles to generate a three-dimensional point cloud of a photographed scene. As machine vision technologies develop, a three-dimensional camera system including two or more cameras is widely applied to obtaining depth information of a three-dimensional scene and reconstructing a three-dimensional point cloud of the scene. The reconstructed three-dimensional point cloud may be applied to scenes such as augmented reality and scene viewpoint transformation.

Generally, for a three-dimensional scene that has a large size, a plurality of three-dimensional image collection systems need to be used to obtain a plurality of depth images of different areas of the scene, and then a three-dimensional point cloud is generated by means of fusion by using an algorithm for fusing a plurality of depth images. To obtain a high-quality three-dimensional point cloud, incorrect areas in each depth image need to be reduced as much as possible, and precise registration of intrinsic and extrinsic parameters of different image collection apparatuses needs to be ensured.

However, during actual application, on one hand, because of an error of a measurement device or limitation of a three-dimensional matching algorithm, a single depth image always includes a pixel whose depth value is incorrectly estimated. On the other hand, because of different manufacturing processes, parameters of different cameras are also slightly different. These problems all affect quality of a three-dimensional point cloud that is output by using an algorithm for fusing a plurality of depth images.

In particular, a region at a foreground border location of a three-dimensional scene is at a border location of foreground and background, and has a scene depth that presents a relatively sharp step, an error or an offset often occurs in an estimated depth value of a pixel at the foreground border location. Consequently, there is an outlier (outlier) or an outlier block that deviates from a general foreground outline around a foreground object in a reconstructed three-dimensional point cloud.

To resolve the foregoing problems, a depth image fusion technology based on visibility is provided in the prior art. This technology may be specifically implemented as follows:

According to the depth image fusion technology based on visibility, a three-dimensional scene is photographed by using a single action camera, and each photographing moment corresponds to a camera location. In this technology, a depth image at each moment is first generated by using a plane sweep (plane sweep) method, then a moment is selected as a reference moment (tref), where a camera location at this moment is a reference viewpoint, and then depth fusion is performed on a depth image at another moment and a depth image at the reference moment. A basic process of a technology for depth fusion of the depth image at the another moment and the depth image at the reference moment is as follows:

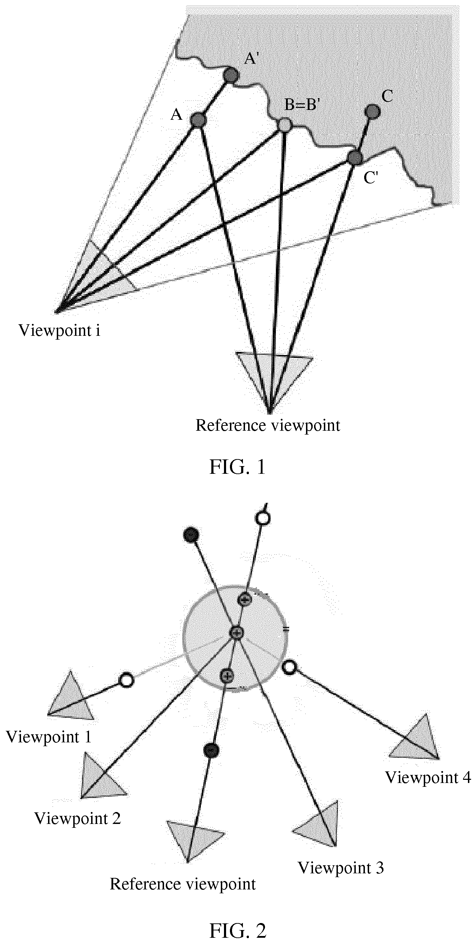

First, a depth image at a current moment (tcur) is projected to a camera location at a reference moment (tref) by using camera parameters at different moments (FIG. 1 is a schematic diagram of projection between different viewpoints).

Next, depth values of corresponding pixel locations in a projected depth image at the current moment (tcur) and a depth image at the reference moment (tref) are compared, and a final depth value is selected according to a comparison result. If a depth value of a pixel location p at the moment tcur affects visibility of a depth value at the moment tref, the depth value at the moment tref is deleted, and N moments before and after the moment tref are selected as a support moment set $\Omega$ref of the moment tref. If the depth value at the moment tcur is closer to a depth value of the point p in $\Omega$ref than the depth value at the moment tref, weighted averaging is performed on the depth value of the point p at the moment tcur and a depth value of the point p in a support area in $\Omega$ref, and a depth of p is updated to a depth value obtained after the weighted averaging (FIG. 2 is a schematic diagram of a depth fusion principle).

The prior art has the following disadvantage: although a discontinuity characteristic in a scene is eliminated by an averaging operation performed on depth values in a support area in a depth fusion process, a pixel offset occurs in a depth discontinuous location in the scene. Consequently, a three-dimensional image finally formed is distorted.

## SUMMARY

The present invention provides a method and an apparatus for fusing a plurality of depth images. The method and the apparatus provided in the present invention resolve a problem that in a three-dimensional scene, a pixel offset occurs in a depth discontinuous location at which a foreground object borders a background object, and consequently a three-dimensional image finally formed is distorted.

According to a first aspect, a method for fusing a plurality of depth images is provided. The method includes:

obtaining N depth images collected by N image collection units, where N≥2;

obtaining a first foreground pixel of an $i^{th}$ depth image of the N depth images, where $i \geq 1$ and $i \leq N$, and the $i^{th}$ depth image is a depth image collected by an $i^{th}$ image collection unit of the N image collection units; back-projecting the first foreground pixel to three-dimensional space, to obtain a foreground three-dimensional space point, and projecting the foreground three-dimensional space point to imaging planes of N-1 image collection units of the N image collection units other than the $i^{th}$ collection unit, to obtain N-1 projected points that correspond to the first foreground pixel and that are in depth images respectively collected by the N-1 image collection units; determining whether depth values of the foreground three-dimensional space point in respective coordinate systems of the N-1 image collection units are greater than or equal to depth values of the respective N-1 projected points corresponding to the first foreground pixel; and when the depth values of the foreground three-dimensional space point in the respective coordinate systems of the N-1 image collection units are greater than or equal to the depth values of the respective N-1 projected points corresponding to the first foreground pixel, obtaining a three-dimensional point cloud by means of fusion and according to the first foreground pixel and the N-1 projected points corresponding to the first foreground pixel.

With reference to the first aspect, in a first possible implementation, the obtaining a three-dimensional point cloud by means of fusion and according to the first foreground pixel and the N-1 projected points corresponding to the first foreground pixel includes:

calculating respective depth confidence levels of the N-1 projected points corresponding to the first foreground pixel, where the depth confidence levels of the N-1 projected points corresponding to the first foreground pixel are respectively used to indicate depth value change degrees of pixels in image areas in which the N-1 projected points corresponding to the first foreground pixel are respectively located; determining, according to the respective depth confidence levels of the N-1 projected points corresponding to the first foreground pixel, a first reliable projected point whose depth confidence level meets a preset condition in the N-1 projected points corresponding to the first foreground pixel; and obtaining the three-dimensional point cloud by means of fusion and according to the first foreground pixel and the first reliable projected point.

With reference to the first possible implementation of the first aspect, in a second possible implementation, the obtaining the three-dimensional point cloud by means of fusion and according to the first foreground pixel and the first reliable projected point includes:

calculating an adjacent degree of the first reliable projected point, where the adjacent degree of the first reliable projected point is a difference between a depth value of the first reliable projected point and a depth value of the foreground three-dimensional space point, and the depth value of the foreground three-dimensional space point is a depth value of the foreground three-dimensional space point in a coordinate system of an image collection unit used to collect the first reliable projected point; determining, according the first reliable projected point, a second reliable projected point whose adjacent degree meets a preset condition; and back-projecting the second reliable projected point to three-dimensional space, to obtain a three-dimensional space point corresponding to the second reliable projected point; and using three-dimensional coordinate averages of three-dimensional coordinates of the three-dimensional space point corresponding to the second reliable projected point and three-dimensional coordinates of the foreground three-dimensional space point as three-dimensional coordinate values of a three-dimensional space point obtained by means of fusion, and using the three-dimensional space point obtained by means of fusion as a three-dimensional space point of the three-dimensional point cloud obtained by means of fusion, to obtain the three-dimensional point cloud by means of fusion.

With reference to the second possible implementation of the first aspect, in a third possible implementation, the method further includes:

obtaining N color images collected by the N image collection units, where the N color images are in a one-to-one correspondence to the N depth images; obtaining a second color value of a pixel that corresponds to the second reliable projected point and that is in the N color images, and a foreground color value of a pixel that corresponds to the first foreground pixel and that is in the N color images; and using a color value average of the second color value and the foreground color value as a color value of the three-dimensional space point obtained by means of fusion.

With reference to any one of the first to the third possible implementations, in a fourth possible implementation, the calculating respective depth confidence levels of the N-1 projected points corresponding to the first foreground pixel includes:

determining, in an image area in which any projected point of the N-1 projected points is located, a maximum depth value and a minimum depth value in the image area;

obtaining a difference between the maximum depth value and the minimum depth value, where when the difference is greater than a preset difference threshold, the difference is set to be equal to the difference threshold; and

scaling the difference by using a preset scale factor so that the difference is within a preset interval range, and using the scaled difference as a depth confidence level of the projected point.

With reference to the first aspect or any one of the first to the fourth possible implementations of the first aspect, in a fifth possible implementation, before the determining whether depth values of the foreground three-dimensional space point in respective coordinate systems of the N-1 image collection units are greater than or equal to depth values of the respective N-1 projected points corresponding to the first foreground pixel, the method further includes:

determining whether there is a background pixel in the N-1 projected points corresponding to the first foreground pixel; and

when there is a background pixel in the N-1 projected points corresponding to the first foreground pixel, increasing a depth value of the first foreground pixel by a depth offset whose value is within a preset numerical value range, to update the depth value of the first foreground pixel, and performing the determining whether depth values of the foreground three-dimensional space point in respective coordinate systems of the N-1 image collection units are greater than or equal to depth values of the respective N-1 projected points corresponding to the first foreground pixel; or

when there is no background pixel in the N-1 projected points corresponding to the first foreground pixel, performing the determining whether depth values of the foreground three-dimensional space point in respective coordinate systems of the N-1 image collection units are greater than or equal to depth values of the respective N-1 projected points corresponding to the first foreground pixel.

With reference to the first aspect or any one of the first to the fifth possible implementations of the first aspect, in a sixth possible implementation, the obtaining a first foreground pixel of an $i^{th}$ depth image of the N depth images includes:

obtaining a first pixel in the $i^{th}$ depth image, and when a depth value of the first pixel is less than or equal to a preset depth threshold, and a color value of a pixel that corresponds to the first pixel and that is in an $i^{th}$ color image is not equal to a background color value of the $i^{th}$ color image, using the first pixel as the first foreground pixel, where the $i^{th}$ color image is an image collected by the $i^{th}$ image collection unit.

According to a second aspect, an apparatus for fusing a plurality of depth images is provided. The apparatus includes:

an image obtaining unit, configured to obtain N depth images collected by N image collection units, where N≥2;

a foreground point obtaining unit, configured to obtain a first foreground pixel of an $i^{th}$ depth image of the N depth images obtained by the image obtaining unit, where i≥1 and i≤N, and the $i^{th}$ depth image is a depth image collected by an $i^{th}$ image collection unit of the N image collection units;

a projection unit, configured to: back-project the first foreground pixel obtained by the foreground point obtaining unit to three-dimensional space, to obtain a foreground three-dimensional space point, and project the foreground three-dimensional space point to imaging planes of N-1 image collection units of the N image collection units other than the $i^{th}$ collection unit, to obtain N-1 projected points that correspond to the first foreground pixel and that are in depth images respectively collected by the N-1 image collection units;

a determining unit, configured to determine whether depth values of the foreground three-dimensional space point obtained by the projection unit in respective coordinate systems of the N-1 image collection units are greater than or equal to depth values of the respective N-1 projected points corresponding to the first foreground pixel; and

a fusion unit, configured to: when the determining unit determines that the depth values of the foreground three-dimensional space point in the respective coordinate systems of the N-1 image collection units are greater than or equal to the depth values of the respective N-1 projected points corresponding to the first foreground pixel, obtain a three-dimensional point cloud by means of fusion and according to the first foreground pixel and the N-1 projected points corresponding to the first foreground pixel.

With reference to the second aspect, in a first possible implementation, the fusion unit includes:

a calculation unit, configured to calculate respective depth confidence levels of the N-1 projected points corresponding to the first foreground pixel, where the depth confidence levels of the N-1 projected points corresponding to the first foreground pixel are respectively used to indicate depth value change degrees of pixels in image areas in which the N-1 projected points corresponding to the first foreground pixel are respectively located;

a determining unit, configured to determine, according to the respective depth confidence levels of the N-1 projected points corresponding to the first foreground pixel that are calculated by the calculation sub-unit, a first reliable projected point whose depth confidence level meets a preset condition in the N-1 projected points corresponding to the first foreground pixel; and

a fusion subunit, configured to obtain the three-dimensional point cloud by means of fusion and according to the first foreground pixel and the first reliable projected point that is determined by the determining unit.

With reference to the first possible implementation of the second aspect, in a second possible implementation, the fusion subunit is configured to:

calculate an adjacent degree of the first reliable projected point, where the adjacent degree of the first reliable projected point is a difference between a depth value of the first reliable projected point and a depth value of the foreground three-dimensional space point, and the depth value of the foreground three-dimensional space point is a depth value of the foreground three-dimensional space point in a coordinate system of an image collection unit used to collect the first reliable projected point;

determine, according the first reliable projected point, a second reliable projected point whose adjacent degree meets a preset condition;

back-project the second reliable projected point to three-dimensional space, to obtain a three-dimensional space point corresponding to the second reliable projected point; and

use three-dimensional coordinate averages of three-dimensional coordinates of the three-dimensional space point corresponding to the second reliable projected point and three-dimensional coordinates of the foreground three-dimensional space point as three-dimensional coordinate values of a three-dimensional space point obtained by means of fusion, and use the three-dimensional space point obtained by means of fusion as a three-dimensional space point of the three-dimensional point cloud obtained by means of fusion, to obtain the three-dimensional point cloud by means of fusion.

With reference to the second possible implementation of the second aspect, in a third possible implementation, the fusion subunit is further configured to:

obtain N color images collected by the N image collection units, where the N color images are in a one-to-one correspondence to the N depth images;

obtain a second color value of a pixel that corresponds to the second reliable projected point and that is in the N color images, and a foreground color value of a pixel that corresponds to the first foreground pixel and that is in the N color images; and

use a color value average of the second color value and the foreground color value as a color value of the three-dimensional space point obtained by means of fusion.

With reference to any one of the first to the third possible implementations of the second aspect, in a fourth possible implementation, the calculation unit is configured to:

determine, in an image area in which any projected point of the N-1 projected points is located, a maximum depth value and a minimum depth value in the image area; and

obtain a difference between the maximum depth value and the minimum depth value, where when the difference is greater than a preset difference threshold, the difference is set to be equal to the difference threshold; and scale the difference by using a preset scale factor so that the difference is within a preset interval range, and use the scaled difference as a depth confidence level of the projected point.

With reference to the second aspect or any one of the first to the fourth possible implementations of the second aspect, in a fifth possible implementation, the determining unit is further configured to:

before determining whether the depth values of the foreground three-dimensional space point in the respective coordinate systems of the N-1 image collection units are greater than or equal to the depth values of the respective N-1 projected points corresponding to the first foreground pixel, determine whether there is a background pixel in the N-1 projected points corresponding to the first foreground pixel; and

when there is a background pixel in the N-1 projected points corresponding to the first foreground pixel, increase a depth value of the first foreground pixel by a depth offset whose value is within a preset numerical value range, to update the depth value of the first foreground pixel, and perform the determining whether depth values of the foreground three-dimensional space point in respective coordinate systems of the N-1 image collection units are greater than or equal to depth values of the respective N-1 projected points corresponding to the first foreground pixel; or when there is no background pixel in the N-1 projected points corresponding to the first foreground pixel, perform the determining whether depth values of the foreground three-dimensional space point in respective coordinate systems of the N-1 image collection units are greater than or equal to depth values of the respective N-1 projected points corresponding to the first foreground pixel.

With reference to the second aspect or any one of the first to the fifth possible implementations of the second aspect, in a sixth possible implementation, the foreground point obtaining unit is configured to:

obtain a first pixel in the $i^{th}$ depth image, and when a depth value of the first pixel is less than or equal to a preset depth threshold, and a color value of a pixel that corresponds to the first pixel and that is in an $i^{th}$ color image is not equal to a background color value of the $i^{th}$ color image, use the first pixel as the first foreground pixel, where the $i^{th}$ color image is an image collected by the $i^{th}$ image collection unit.

One or two of the foregoing technical solutions have at least the following technical effects.

According to the method and the apparatus provided in embodiments of the present invention, first, foreground and background of an image are separated; next, in a process of fusing a plurality of depth images, it is determined whether the depth values of the foreground three-dimensional space point in the respective coordinate systems of the N-1 image collection units are greater than or equal to the depth values of the respective N-1 projected points corresponding to the foreground pixel; and then when the depth values of the foreground three-dimensional space point in the respective coordinate systems of the N-1 image collection units are greater than or equal to the depth values of the respective N-1 projected points corresponding to the foreground pixel, a three-dimensional point cloud is obtained by means of fusion and according to the foreground pixel and the N-1 projected points corresponding to the foreground pixel. It is determined whether the depth values of the foreground three-dimensional space point in the respective coordinate systems of the N-1 image collection units are greater than or equal to the depth values of the respective N-1 projected points corresponding to the foreground pixel, to remove some pixels that cause a three-dimensional point cloud to be distorted after the fusion, thereby improving quality of the border of a three-dimensional point cloud of an object.

**BRIEF DESCRIPTION OF DRAWINGS**

FIG. 1 is a schematic diagram of projection between different viewpoints in the prior art;
FIG. 2 is a schematic diagram of a depth fusion principle in the prior art;
FIG. 3 is a flowchart of a method for fusing a plurality of depth images according to an embodiment of the present invention;
FIG. 4 is a flowchart of a method for obtaining a three-dimensional point cloud by means of fusion and according to an embodiment of the present invention;
FIG. 5 is a flowchart of a method for determining coordinates of each point in a three-dimensional point cloud obtained by means of fusion and according to an embodiment of the present invention;
FIG. 6 is a schematic flowchart of a method for correcting an outlier according to an embodiment of the present invention;
FIG. 7 is a schematic diagram of defining a survivor according to an embodiment of the present invention;
FIG. 8 is a schematic diagram of defining an outlier according to an embodiment of the present invention;
FIG. 9a to FIG. 9c are images correspondingly collected by three cameras;
FIG. 10a is an image drawn by using a three-dimensional point cloud generated by using a solution according to an embodiment of the present invention;
FIG. 10b is an image drawn by using a three-dimensional point cloud generated by using a solution in the prior art;
FIG. 11 is a schematic structural diagram of an apparatus for fusing a plurality of depth images according to an embodiment of the present invention; and
FIG. 12 is a schematic structural diagram of an electronic device according to an embodiment of the present invention.

**DESCRIPTION OF EMBODIMENTS**

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

**Embodiment 1**

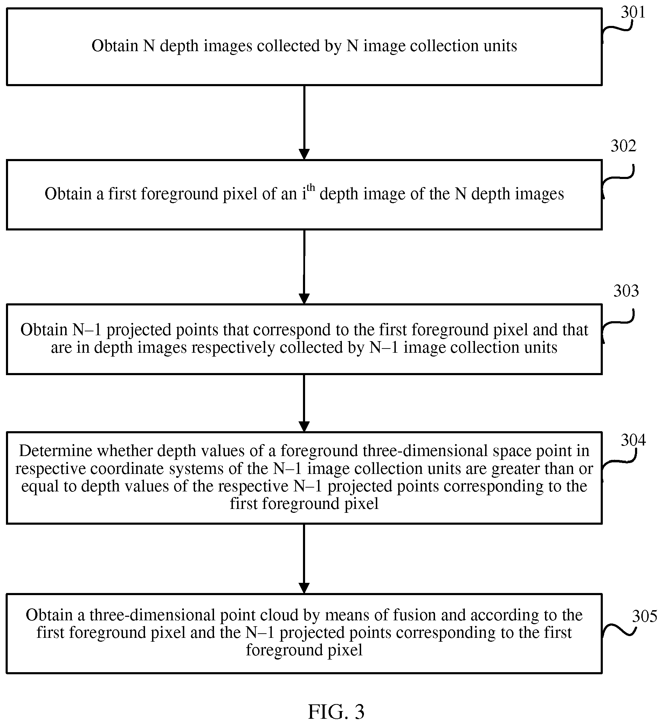

As shown in FIG. 3, this embodiment of the present invention provides a method for fusing a plurality of depth images. The method specifically includes the following implementation steps.

Step 301: Obtain N depth images collected by N image collection units, where N≥2.

In this embodiment, an image collected by an image collection unit may include two parts: a depth image and a color image, and a depth image and a color image collected by each image collection unit are in a one-to-one correspondence.

Step 302: Obtain a first foreground pixel of an $i^{th}$ depth image of the N depth images, where i≥1 and i≤N, and the $i^{th}$ depth image is a depth image collected by an $i^{th}$ image collection unit of the N image collection units.

A foreground pixel is a pixel used to identify a main part of an image instead of background of the image. The first foreground pixel may be obtained (that is, a foreground pixel and a background pixel are separated) by using a plurality of methods such as a depth segmentation method, a color segmentation method, and a segmentation method that combines depth and color. In this embodiment, the method that combines color and depth is used to describe a specific implementation of obtaining the first foreground pixel of the $i^{th}$ depth image of the N depth images.

A first pixel in the $i^{th}$ depth image is obtained, and when a depth value of the first pixel is less than or equal to a preset depth threshold, and a color value of a pixel that corresponds to the first pixel and that is in an $i^{th}$ color image is not equal to a background color value of the $i^{th}$ color image, the first pixel is used as the first foreground pixel, where the $i^{th}$ color image is an image collected by the $i^{th}$ image collection unit.

Step 303: Back-project the first foreground pixel to three-dimensional space, to obtain a foreground three-dimensional space point, and project the foreground three-dimensional space point to imaging planes of N-1 image collection units of the N image collection units other than the $i^{th}$ collection unit, to obtain N-1 projected points that correspond to the first foreground pixel and that are in depth images respectively collected by the N-1 image collection units.

An imaging plane of an image collection unit is a plane in which the image collection unit internally collects light reflected by an image to be taken, to form a corresponding image.

Step 304: Determine whether depth values of the foreground three-dimensional space point in respective coordinate systems of the N-1 image collection units are greater than or equal to depth values of the respective N-1 projected points corresponding to the first foreground pixel.

Step 305: When the depth values of the foreground three-dimensional space point in the respective coordinate systems of the N-1 image collection units are greater than or equal to the depth values of the respective N-1 projected points corresponding to the first foreground pixel, obtain a three-dimensional point cloud by means of fusion and according to the first foreground pixel and the N-1 projected points corresponding to the first foreground pixel.

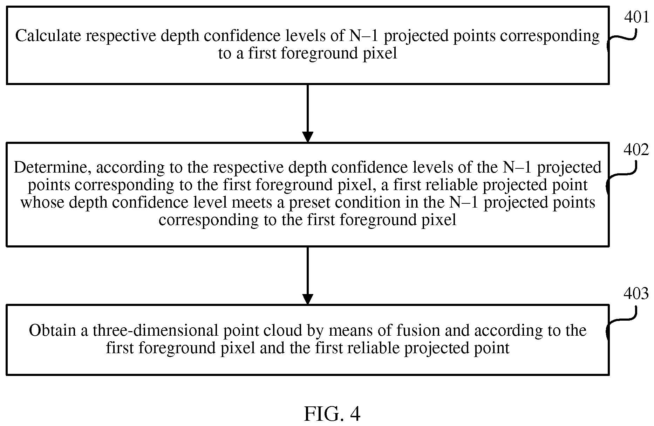

In this embodiment, the three-dimensional point cloud may be obtained by means of fusion and according to the first foreground pixel and the N-1 projected points corresponding to the first foreground pixel in the following specific implementation (as shown in FIG. 4).

Step 401: Calculate respective depth confidence levels of the N-1 projected points corresponding to the first foreground pixel, where the depth confidence levels of the N-1 projected points corresponding to the first foreground pixel are respectively used to indicate depth value change degrees of pixels in image areas in which the N-1 projected points corresponding to the first foreground pixel are respectively located.

The calculating respective depth confidence levels of the N-1 projected points corresponding to the first foreground pixel includes:

determining, in an image area in which any projected point of the N-1 projected points is located, a maximum depth value and a minimum depth value in the image area;
obtaining a difference between the maximum depth value and the minimum depth value, where when the difference is greater than a preset difference threshold, the difference is set to be equal to the difference threshold; and
scaling the difference by using a preset scale factor so that the difference is within a preset interval range, and using the scaled difference as a depth confidence level $C_i(w)$ of the projected point. In a specific usage scene, the scaling interval may be [0, 90].

Step 402: Determine, according to the respective depth confidence levels of the N-1 projected points corresponding to the first foreground pixel, a first reliable projected point whose depth confidence level meets a preset condition in the N-1 projected points corresponding to the first foreground pixel.

A lower depth confidence level indicates more reliable depth values of the N-1 projected points. Therefore, in this embodiment, the first reliable projected point whose depth confidence level meets the preset condition may be a projected point whose depth confidence level is less than a specified threshold.

Step 403: Obtain the three-dimensional point cloud by means of fusion and according to the first foreground pixel and the first reliable projected point.

As can be learned according to the process of determining the depth confidence level $C_i(w)$ provided in this embodiment, if it is determined that an image area of the depth confidence level is a rectangular window with a specified length and a specified width, $C_i(w)$ indicates flatness of a depth value change in the rectangular window whose center is a pixel $w$. Smaller $C_i(w)$ indicates that a depth change is more flatter in the image area, that is, depths of pixels are more consistent in the image area, and a depth value confidence level of the point $w$ is higher. On the contrary, larger $C_i(w)$ indicates that a depth change is more drastic in the image area, that is, depths of pixels are less consistent in the image area, and a depth value confidence level of the point $w$ is lower.

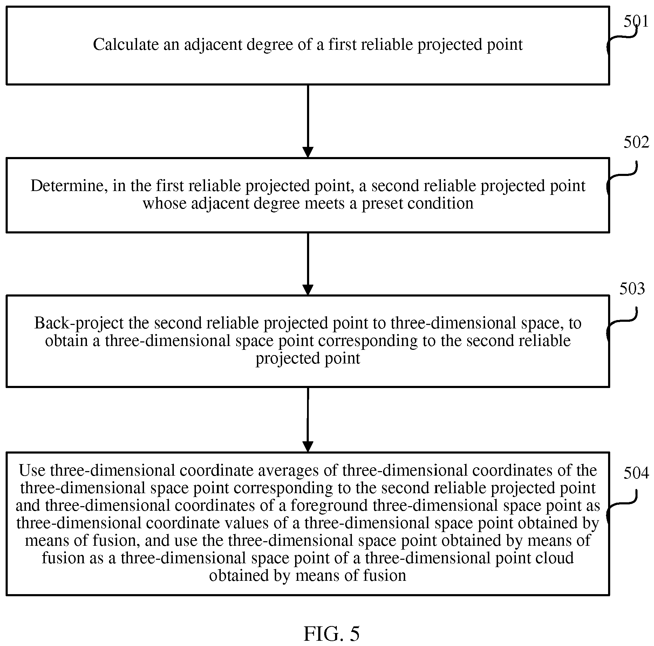

Optionally, in this embodiment, coordinate values of each three-dimensional point need to be determined after image fusion. Therefore, the obtaining the three-dimensional point cloud by means of fusion and according to information about the first foreground pixel and information about the first reliable projected point includes the following steps (as shown in FIG. 5).

Step 501: Calculate an adjacent degree of the first reliable projected point, where the adjacent degree of the first reliable projected point is a difference between a depth value of the first reliable projected point and a depth value of the foreground three-dimensional space point, and the depth value of the foreground three-dimensional space point is a depth value of the foreground three-dimensional space point in a coordinate system of an image collection unit used to collect the first reliable projected point.

Step 502: Determine, in the first reliable projected point, a second reliable projected point whose adjacent degree meets a preset condition.

When a difference between a depth value $d_{ij}(w)$ corresponding to a reliable projected point m and a depth value $D_j(r_j)$ is less than a specified threshold $d_{diff}^{Th}$, it is determined that an adjacent degree of the projected point m meets the preset condition. The depth value $d_{ij}(w)$ is a depth value of a three-dimensional space point $p$ in a coordinate system of a $j^{th}$ image collection unit. $D_j(r_j)$ is a depth value of a projected point $r_j$ after a pixel that corresponds to the three-dimensional space point $p$ and that is in the $i^{th}$ image collection unit is projected to an image plane of a $j^{th}$ camera location.

Step 503: Back-project the second reliable projected point to three-dimensional space, to obtain a three-dimensional space point corresponding to the second reliable projected point.

Step 504: Use three-dimensional coordinate averages of three-dimensional coordinates of the three-dimensional space point corresponding to the second reliable projected point and three-dimensional coordinates of the foreground three-dimensional space point as three-dimensional coordinate values of a three-dimensional space point obtained by means of fusion, and use the three-dimensional space point obtained by means of fusion as a three-dimensional space point of the three-dimensional point cloud obtained by means of fusion, to obtain the three-dimensional point cloud by means of fusion.

Further, if an image collected by the image collection unit further includes a color image, during image fusion, a color value of a three-dimensional space point obtained after the fusion further needs to be determined. The method further includes:

obtaining N color images collected by the N image collection units, where the N color images are in a one-to-one correspondence to the N depth images; obtaining a second color value of a pixel that corresponds to the second reliable projected point and that is in the N color images, and a foreground color value of a pixel that corresponds to the first foreground pixel and that is in the N color images, and using a color value average of the second color value and the foreground color value as a color value of the three-dimensional space point obtained by means of fusion.

The color value may be indicated by luminance and chrominance information, or may be indicated by red green blue (RGB) or YUV.

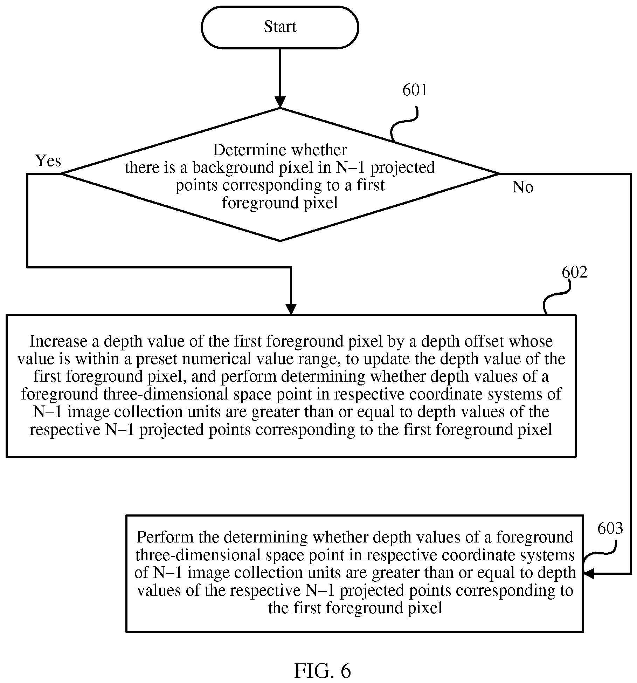

In an image fusion process, in addition to a pixel (or referred to as a survivor) that is determined in the foregoing manner of "determining whether depth values of the foreground three-dimensional space point in respective coordinate systems of the N-1 image collection units are greater than or equal to depth values of the respective N-1 projected points corresponding to the first foreground pixel" and that is effective in three-dimensional point cloud fusion, there are some pixels (or referred to as outliers) that deviate from correct locations during image collection. In this embodiment, to ensure that an image is restored to a large extent, the outliers may be adjusted, so that the outliers can be located at the correct locations after correction. A specific implementation may be as follows (as shown in FIG. 6):

In this embodiment of the present invention, a survivor (survivor) and an outlier (outlier) have the following specific meanings.

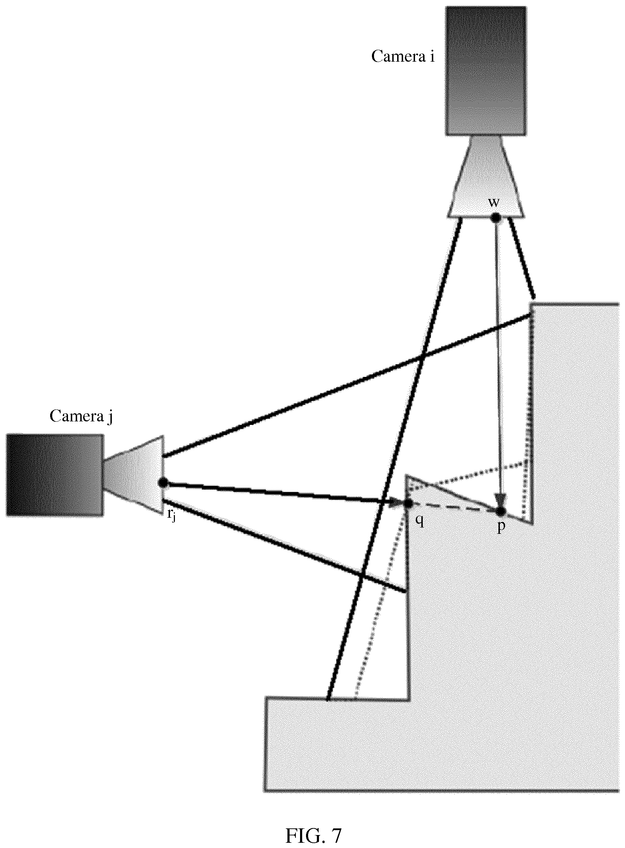

A survivor (survivor) is defined as follows (as shown in FIG. 7): A foreground pixel $w$ is back-projected to a three-dimensional space point $p$ in a world coordinate system; the three-dimensional space point $p$ is projected to an image plane corresponding to a $j^{th}$ image collection unit, to obtain a pixel $r_j$ that corresponds to the foreground pixel $w$ and that is in the image plane corresponding to the $j^{th}$ image collection unit; a depth value $d_{ij}(w)$ of the three-dimensional space point $p$ in a coordinate system of the $j^{th}$ image collection unit is obtained; a depth value $D_j(r_j)$ of the pixel $r_j$ in a depth image corresponding to the $j^{th}$ image collection unit is obtained; and if $d_{ij}(w)$ is not less than $D_j(r_j)$, it is determined that the foreground pixel $w$ is a survivor.

In this embodiment, a value relationship between $d_{ij}(w)$ and $D_j(r_j)$ indicates visibility that is of the foreground pixel $w$ in the $i^{th}$ image collection unit and that is at a location of the $j^{th}$ image collection unit. When $d_{ij}(w) \geq D_j(r_j)$, it indicates that the projected point that is of the point $w$ and that is at the location of the $j^{th}$ image collection unit does not affect visibility of another pixel at the location of the $j^{th}$ image collection unit. As can be learned according to the definition of a survivor, a physical meaning of a survivor at a location of the $i^{th}$ image collection unit is as follows: A pixel in an image collected by the $i^{th}$ image collection unit is visible at the location of the $i^{th}$ image collection unit, and the pixel does not affect visibility of a pixel at a location of any other image collection unit.

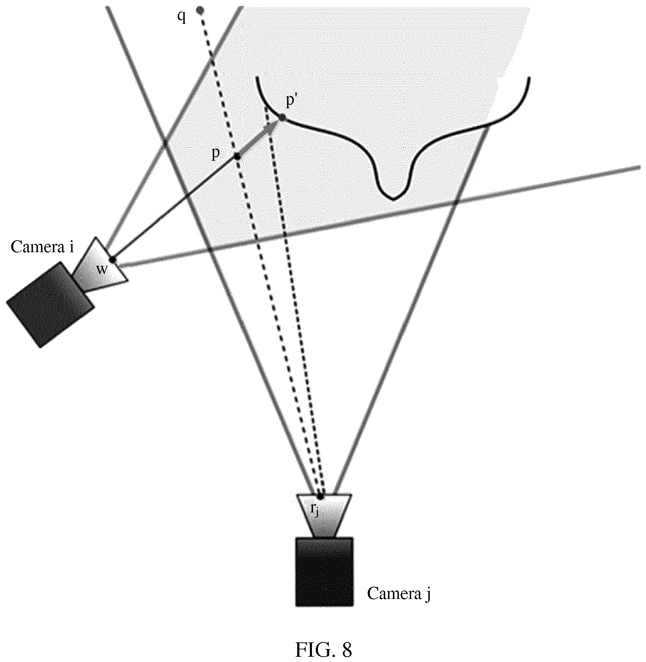

An outlier (outlier) is defined as follows (as shown in FIG. 8): The foreground pixel $w$ is back-projected to the three-dimensional space point $p$ in the world coordinate system; the three-dimensional space point $p$ is projected to the image plane corresponding to the $j^{th}$ image collection unit, to obtain the pixel $r_j$ that corresponds to the foreground pixel $w$ and that is in the image plane corresponding to the $j^{th}$ image collection unit; the depth value $D_j(r_j)$ of the pixel $r_j$ in the depth image corresponding to the j^th image collection unit is obtained; it is determined, according to the depth value $D_j(r_j)$, whether the pixel $r_j$ is a background pixel point; and if yes, it is determined that the foreground pixel w is an outlier.

In conclusion, an outlier indicates that the projected point that is of the point w and that is at the location of the j^th image collection unit deviates to the exterior of a general foreground outline.

Based on the foregoing concepts of an outlier and a survivor, to ensure that the pixel w that is determined as an outlier is correctly fused to the interior of a foreground object, the depth value of the point w may be increased by an offset, and the projected point p of the point w moves, along a direction of a projected line from the point p to the i^th image collection unit (for example, a camera), to a point p' at a location on the surface of the foreground object. In the manner of adding a depth offset, the outlier w is correctly fused to the interior of the foreground object, thereby improving fusion quality of the three-dimensional point cloud.

Step 601: Determine whether there is a background pixel in the N-1 projected points corresponding to the first foreground pixel; if there is a background pixel, perform step 602; otherwise, perform step 603.

Step 602: When there is a background pixel in the N-1 projected points corresponding to the first foreground pixel, increase a depth value of the first foreground pixel by a depth offset whose value is within a preset numerical value range, to update the depth value of the first foreground pixel, and perform the determining whether depth values of the foreground three-dimensional space point in respective coordinate systems of the N-1 image collection units are greater than or equal to depth values of the respective N-1 projected points corresponding to the first foreground pixel.

Step 603: When there is no background pixel in the N-1 projected points corresponding to the first foreground pixel, perform the determining whether depth values of the foreground three-dimensional space point in respective coordinate systems of the N-1 image collection units are greater than or equal to depth values of the respective N-1 projected points corresponding to the first foreground pixel.

According to the method provided in this embodiment of the present invention, first, foreground and background of an image are separated; next, in a process of fusing a plurality of depth images, it is determined, by using a depth value of a pixel, whether a fusion pixel is a survivor (thereby removing some points whose depth values are erroneous); and then an averaging operation is performed on depth values of survivors that meet a condition. Therefore, despite a depth discontinuous location, the solution for reconstructing a three-dimensional object of a plurality of depth images provided in the present invention can effectively remove a pixel whose depth is incorrectly estimated and that is in the border of a foreground object, thereby improving quality of the border of a three-dimensional point cloud of the object.

## Embodiment 2

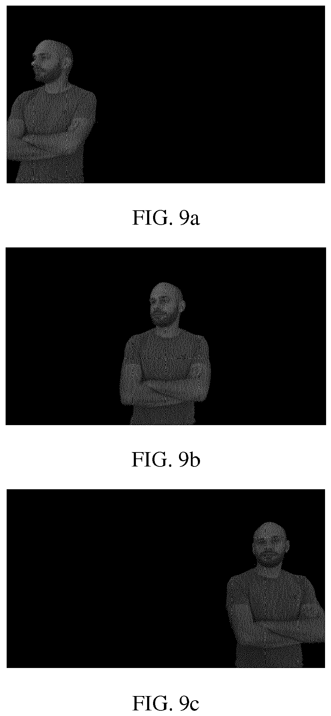

To describe content of the solution of the present invention in detail, depth images and color images of three cameras of a speaker test sequence that are taken in a laboratory are used as input data of the technical solution of the present invention (figures corresponding to the three cameras of the speaker test sequence are FIG. 9a to FIG. 9c, FIG. 9a corresponds to a first camera, FIG. 9b corresponds to a second camera, and FIG. 9c corresponds to a third camera).

Images shown in FIG. 9a to FIG. 9c are first separated by using a color segmentation technology and a depth segmentation technology, to separate a foreground area and a background area. A background color $B_C$ is black; therefore, RGB of the background color is set as follows: R=0, G=0, and B=0. A value of a depth threshold $D_{th}$ in depth segmentation is $D_{th}$ = 0mm.

A depth confidence level at each pixel location is calculated by using a formula

$$C_i(w) = D_{diff} / D_{diff}^{\max} * 90$$

, where a width of a search window is 2L+1, a parameter L=3 and a value of a maximum depth difference $D_{diff}^{\max}$ is $D_{diff}^{\max} = 25mm$.

Foreground pixels in the images of the three cameras are projected, offset fusion is performed on an outlier (outlier), and survivor sets corresponding to camera locations are obtained. When offset fusion is performed on outliers in the images of the three cameras, a depth offset threshold is set to $d_{offset}^{Th} = 35mm$.

The survivor sets of the camera locations are averaged to obtain a final three-dimensional point cloud, a threshold of a depth confidence level in a depth reliability rule is set to $C_{Th}$ = 60, and a threshold of a depth difference in a depth adjacency rule is set to

$$d_{diff}^{Th} = 15mm$$

.

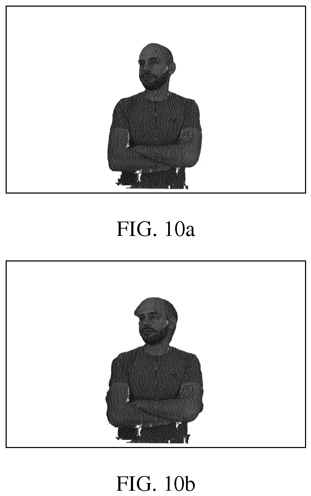

As shown in FIG. 10a and FIG. 10b, FIG. 10a is a virtual viewpoint image generated by drawing, at a location of the second camera, a three-dimensional point cloud generated by using the solution provided in the embodiments of the present invention. FIG. 10b is a virtual viewpoint image generated by drawing, at a location of the second camera, a three-dimensional point cloud generated when an outlier has no depth offset. FIG. 10a and FIG. 10b are separately compared with FIG. 9b. As can be learned, in FIG. 10a and FIG. 10b, foreground person outlines are basically consistent and match each other; and because no outlier is modified, the foreground person outline in FIG. 10b is much larger than a foreground person outline in FIG. 9b. Therefore, according to the method provided in the embodiments of the present invention, an outlier around a foreground person outline can be effectively removed, thereby improving quality of reconstructing a three-dimensional point cloud.

**Embodiment 3**

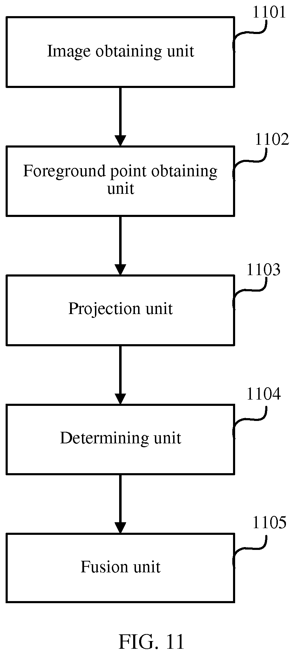

As shown in FIG. 11, this embodiment of the present invention provides an apparatus for fusing a plurality of depth images. The apparatus specifically includes: an image obtaining unit 1101, a foreground point obtaining unit 1102, a projection unit 1103, a determining unit 1104, and a fusion unit 1105.

The image obtaining unit 1101 is configured to obtain N depth images collected by N image collection units, where $N \geq 2$.

The foreground point obtaining unit 1102 is configured to obtain a first foreground pixel of an $i^{th}$ depth image of the N depth images obtained by the image obtaining unit, where $i \geq 1$ and $i \leq N$, and the $i^{th}$ depth image is a depth image collected by an $i^{th}$ image collection unit of the N image collection units.

Optionally, the image foreground point obtaining unit 1102 is specifically configured to: obtain a first pixel in the $i^{th}$ depth image, and when a depth value of the first pixel is less than or equal to a preset depth threshold, and a color value of a pixel that corresponds to the first pixel and that is in an $i^{th}$ color image is not equal to a background color value of the $i^{th}$ color image, use the first pixel as the first foreground pixel, where the $i^{th}$ color image is an image collected by the $i^{th}$ image collection unit.

The projection unit 1103 is configured to: back-project the first foreground pixel obtained by the foreground point obtaining unit to three-dimensional space, to obtain a foreground three-dimensional space point, and project the foreground three-dimensional space point to imaging planes of N-1 image collection units of the N image collection units other than the $i^{th}$ collection unit, to obtain N-1 projected points that correspond to the first foreground pixel and that are in depth images respectively collected by the N-1 image collection units.

The determining unit 1104 is configured to determine whether depth values of the foreground three-dimensional space point obtained by the projection unit in respective coordinate systems of the N-1 image collection units are greater than or equal to depth values of the respective N-1 projected points corresponding to the first foreground pixel.

The fusion unit 1105 is configured to: when the determining unit determines that the depth values of the foreground three-dimensional space point in the respective coordinate systems of the N-1 image collection units are greater than or equal to the depth values of the respective N-1 projected points corresponding to the first foreground pixel, obtain a three-dimensional point cloud by means of fusion and according to the first foreground pixel and the N-1 projected points corresponding to the first foreground pixel.

Optionally, the fusion unit 1105 includes:

a calculation unit, configured to calculate respective depth confidence levels of the N-1 projected points corresponding to the first foreground pixel, where the depth confidence levels of the N-1 projected points corresponding to the first foreground pixel are respectively used to indicate depth value change degrees of pixels in image areas in which the N-1 projected points corresponding to the first foreground pixel are respectively located, where optionally, the calculation unit is specifically configured to:

determine, in an image area in which any projected point of the N-1 projected points is located, a maximum depth value and a minimum depth value in the image area; and obtain a difference between the maximum depth value and the minimum depth value, where when the difference is greater than a preset difference threshold, the difference is set to be equal to the difference threshold; and scale the difference by using a preset scale factor so that the difference is within a preset interval range, and use the scaled difference as a depth confidence level of the projected point;

a determining unit, configured to determine, according to the respective depth confidence levels of the N-1 projected points corresponding to the first foreground pixel that are calculated by the calculation sub-unit, a first reliable projected point whose depth confidence level meets a preset condition in the N-1 projected points corresponding to the first foreground pixel; and

a fusion subunit, configured to obtain the three-dimensional point cloud by means of fusion and according to the first foreground pixel and the first reliable projected point that is determined by the determining unit.

Optionally, the fusion subunit is specifically configured to:

calculate an adjacent degree of the first reliable projected point, where the adjacent degree of the first reliable projected point is a difference between a depth value of the first reliable projected point and a depth value of the foreground three-dimensional space point, and the depth value of the foreground three-dimensional space point is a depth value of the foreground three-dimensional space point in a coordinate system of an image collection unit used to collect the first reliable projected point; determine, in the first reliable projected point, a second reliable projected point whose adjacent degree meets a preset condition; back-project the second reliable projected point to three-dimensional space, to obtain a three-dimensional space point corresponding to the second reliable projected point; and use three-dimensional coordinate averages of three-dimensional coordinates of the three-dimensional space point corresponding to the second reliable projected point and three-dimensional coordinates of the foreground three-dimensional space point as three-dimensional coordinate values of a three-dimensional space point obtained by means of fusion, and use the three-dimensional space point obtained by means of fusion as a three-dimensional space point of the three-dimensional point cloud obtained by means of fusion, to obtain the three-dimensional point cloud by means of fusion.

Further, if an image collected by the image collection unit further includes a color image, during image fusion, a color value of a three-dimensional space point obtained after the fusion further needs to be determined. The fusion subunit is further configured to:

obtain N color images collected by the N image collection units, where the N color images are in a one-to-one correspondence to the N depth images;
obtain a second color value of a pixel that corresponds to the second reliable projected point and that is in the N color images, and a foreground color value of a pixel that corresponds to the first foreground pixel and that is in the N color images; and use a color value average of the second color value and the foreground color value as a color value of the three-dimensional space point obtained by means of fusion.

In an image fusion process, in addition to a pixel (or referred to as a survivor) that is determined in the foregoing manner of "determining whether depth values of the foreground three-dimensional space point in respective coordinate systems of the N-1 image collection units are greater than or equal to depth values of the respective N-1 projected points corresponding to the first foreground pixel" and that is effective in three-dimensional point cloud fusion, there are some pixels (or referred to as outliers) that deviate from correct locations during image collection. In this embodiment, to ensure that an image is restored to a large extent, the outliers may be adjusted, so that the outliers can be located at the correct locations after correction. In this embodiment of the present invention, a survivor (survivor) and an outlier (outlier) have the following specific meanings.

A survivor (survivor) is defined as follows (as shown in FIG. 7): A foreground pixel $w$ is back-projected to a three-dimensional space point $p$ in a world coordinate system; the three-dimensional space point $p$ is projected to an image plane corresponding to a $j^{th}$ image collection unit, to obtain a pixel $w$ that corresponds to the foreground pixel $r_j$ and that is in the image plane corresponding to the $j^{th}$ image collection unit; a depth value $d_{ij}(w)$ of the three-dimensional space point $p$ in a coordinate system of the $j^{th}$ image collection unit is obtained; a depth value $D_j(r_j)$ of the pixel $r_j$ in a depth image corresponding to the

$j^{th}$ image collection unit is obtained; and if $d_{ij}(w)$ is not less than $D_j(r_j)$, it is determined that the foreground pixel $w$ is a survivor.

In this embodiment, a value relationship between $d_{ij}(w)$ and $D_j(r_j)$ indicates visibility that is of the foreground pixel $w$ in the $i^{th}$ image collection unit and that is at a location of the $j^{th}$ image collection unit. When $d_{ij}(w) \geq D_j(r_j)$, it indicates that the projected point that is of the point $w$ and that is at the location of the $j^{th}$ image collection unit does not affect visibility of another pixel at the location of the $j^{th}$ image collection unit. As can be learned according to the definition of a survivor, a physical meaning of a survivor at a location of the $i^{th}$ image collection unit is as follows: A pixel in an image collected by the $i^{th}$ image collection unit is visible at the location of the $i^{th}$ image collection unit, and the pixel does not affect visibility of a pixel at a location of any other image collection unit.

An outlier (outlier) is defined as follows (as shown in FIG. 8): The foreground pixel $w$ is back-projected to the three-dimensional space point $p$ in the world coordinate system; the three-dimensional space point $p$ is projected to the image plane corresponding to the $j^{th}$ image collection unit, to obtain the pixel $w$ that corresponds to the foreground pixel $r_j$ and that is in the image plane corresponding to the $j^{th}$ image collection unit; the depth value $D_j(r_j)$ of the pixel $r_j$ in the depth image corresponding to the $j^{th}$ image collection unit is obtained; it is determined, according to the depth value $D_j(r_j)$, whether the pixel $r_j$ is a background pixel point; and if yes, it is determined that the foreground pixel $w$ is an outlier.

In conclusion, an outlier indicates that the projected point that is of the point $w$ and that is at the location of the $j^{th}$ image collection unit deviates to the exterior of a general foreground outline.

Based on the foregoing concepts of an outlier and a survivor, to ensure that the pixel $w$ that is determined as an outlier is correctly fused to the interior of a foreground object, the depth value of the point $w$ may be increased by an offset, and the projected point $p$ of the point $w$ moves, along a direction of a projected line from the point $p$ to the $i^{th}$ image collection unit (for example, a camera), to a point $p'$ at a location on the surface of the foreground object. In the manner of adding a depth offset, the outlier $w$ is correctly fused to the interior of the foreground object, thereby improving fusion quality of the three-dimensional point cloud. Based on the foregoing concepts of an outlier and a survivor, correspondingly, the determining unit 1104 in this embodiment of the present invention may be specifically configured to:

before determining whether the depth values of the foreground three-dimensional space point in the respective coordinate systems of the N-1 image collection units are greater than or equal to the depth values of the respective N-1 projected points corresponding to the first foreground pixel, determine whether there is a background pixel in the N-1 projected points corresponding to the first foreground pixel; and

when there is a background pixel in the N-1 projected points corresponding to the first foreground pixel, increase a depth value of the first foreground pixel by a depth offset whose value is within a preset numerical value range, to update the depth value of the first foreground pixel, and perform the determining whether depth values of the foreground three-dimensional space point in respective coordinate systems of the N-1 image collection units are greater than or equal to depth values of the respective N-1 projected points corresponding to the first foreground pixel; or when there is no background pixel in the N-1 projected points corresponding to the first foreground pixel, perform the determining whether depth values of the foreground three-dimensional space point in respective coordinate systems of the N-1 image collection units are greater than or equal to depth values of the respective N-1 projected points corresponding to the first foreground pixel.

**Embodiment 4**

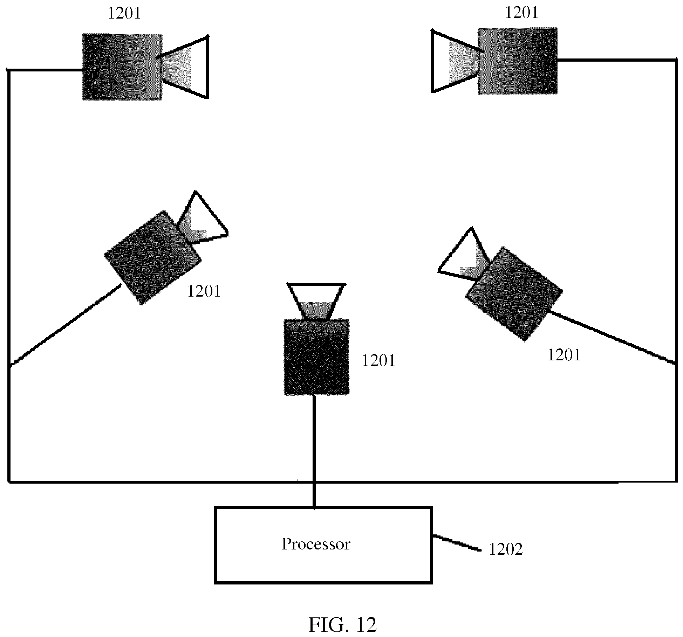

As shown in FIG. 12, this embodiment of the present invention further provides an electronic device. The electronic device includes:

N image collection apparatuses 1201, configured to collect N depth images, where $N \geq 2$; and a processor 1202, configured to: obtain a first foreground pixel of an $i^{th}$ depth image of the N depth images obtained by N image collection units, where $i \geq 1$ and $i \leq N$, and the $i^{th}$ depth image is a depth image collected by an $i^{th}$ image collection unit of the N image collection units; back-project the first foreground pixel obtained by a foreground point obtaining unit to three-dimensional space, to obtain a foreground three-dimensional space point, and project the foreground three-dimensional space point to imaging planes of N-1 image collection units of the N image collection units other than the $i^{th}$ collection unit, to obtain N-1 projected points that correspond to the first foreground pixel and that are in depth images respectively collected by the N-1 image collection units; determine whether depth values of the foreground three-dimensional space point obtained by a projection unit in respective coordinate systems of the N-1 image collection units are greater than or equal to depth values of the respective N-1 projected points corresponding to the first foreground pixel; and when a determining unit determines that the depth values of the foreground three-dimensional space point in the respective coordinate systems of the N-1 image collection units are greater than or equal to the depth values of the respective N-1 projected points corresponding to the first foreground pixel, obtain a three-dimensional point cloud by means of fusion and according to the first foreground pixel and the N-1 projected points corresponding to the first foreground pixel.

The foregoing one or more technical solutions in the embodiments of this application have at least the following technical effects.

According to the method and the apparatus provided in the embodiments of the present invention, first, foreground and background of an image are separated; next, in a process of fusing a plurality of depth images, it is determined, by using a depth value of a pixel, whether a fusion pixel is a survivor (thereby removing some points whose depth values are erroneous); and then an averaging operation is performed on depth values of survivors that meet a condition. Therefore, despite a depth discontinuous location, the solution for reconstructing a three-dimensional object of a plurality of depth images provided in the present invention can effectively remove a pixel whose depth is incorrectly estimated and that is in the border of a foreground object, thereby improving quality of the border of a three-dimensional point cloud of the object.

The methods described in the present invention are not limited to the embodiments described in the Description of Embodiments. Another implementation obtained by a person skilled in the art according to the technical solutions of the present invention still belongs to a technical innovation scope of the present invention.

Obviously, a person skilled in the art can make various modifications and variations to the present invention without departing from the scope of the present invention. The present invention is intended to cover these modifications and variations provided that they fall within the scope of protection defined by the following claims and their equivalent technologies.

**Claims**

1. A method for fusing a plurality of depth images, wherein the method comprises:

obtaining N depth images collected by N image collection units, wherein $N \geq 2$;
obtaining a first foreground pixel of an $i^{th}$ depth image of the N depth images, wherein $i \geq 1$ and $i \leq N$, and the $i^{th}$ depth image is a depth image collected by an $i^{th}$ image collection unit of the N image collection units;
back-projecting the first foreground pixel to three-dimensional space, to obtain a foreground three-dimensional space point, and projecting the foreground three-dimensional space point to imaging planes of N-1 image collection units of the N image collection units other than the $i^{th}$ collection unit, to obtain N-1 projected points that correspond to the first foreground pixel and that are in depth images respectively collected by the N-1 image collection units;

determining whether depth values of the foreground three-dimensional space point in respective coordinate systems of the N-1 image collection units are greater than or equal to depth values of the respective N-1 projected points corresponding to the first foreground pixel; and when the depth values of the foreground three-dimensional space point in the respective coordinate systems of the N-1 image collection units are greater than or equal to the depth values of the respective N-1 projected points corresponding to the first foreground pixel, obtaining a three-dimensional point cloud by means of fusion and according to the first foreground pixel and the N-1 projected points corresponding to the first foreground pixel.

2. The method according to claim 1, wherein the obtaining a three-dimensional point cloud by means of fusion and according to the first foreground pixel and the N-1 projected points corresponding to the first foreground pixel comprises:

calculating respective depth confidence levels of the N-1 projected points corresponding to the first foreground pixel, wherein the depth confidence levels of the N-1 projected points corresponding to the first foreground pixel are respectively used to indicate depth value change degrees of pixels in image areas in which the N-1 projected points corresponding to the first foreground pixel are respectively located;

determining, according to the respective depth confidence levels of the N-1 projected points corresponding to the first foreground pixel, a first reliable projected point whose depth confidence level meets a preset condition in the N-1 projected points corresponding to the first foreground pixel; and

obtaining the three-dimensional point cloud by means of fusion and according to the first foreground pixel and the first reliable projected point.

3. The method according to claim 2, wherein the obtaining the three-dimensional point cloud by means of fusion and according to the first foreground pixel and the first reliable projected point comprises:

calculating an adjacent degree of the first reliable projected point, wherein the adjacent degree of the first reliable projected point is a difference between a depth value of the first reliable projected point and a depth value of the foreground three-dimensional space point, and the depth value of the foreground three-dimensional space point is a depth value of the foreground three-dimensional space point in a coordinate system of an image collection unit used to collect the first reliable projected point;

determining, according the first reliable projected point, a second reliable projected point whose adjacent degree meets a preset condition; and

back-projecting the second reliable projected point to three-dimensional space, to obtain a three-dimensional space point corresponding to the second reliable projected point; and using three-dimensional coordinate averages of three-dimensional coordinates of the three-dimensional space point corresponding to the second reliable projected point and three-dimensional coordinates of the foreground three-dimensional space point as three-dimensional coordinate values of a three-dimensional space point obtained by means of fusion, and using the three-dimensional space point obtained by means of fusion as a three-dimensional space point of the three-dimensional point cloud obtained by means of fusion, to obtain the three-dimensional point cloud by means of fusion.

4. The method according to claim 3, wherein the method further comprises:

obtaining N color images collected by the N image collection units, wherein the N color images are in a one-to-one correspondence to the N depth images;

obtaining a second color value of a pixel that corresponds to the second reliable projected point and that is in the N color images, and a foreground color value of a pixel that corresponds to the first foreground pixel and that is in the N color images; and

using a color value average of the second color value and the foreground color value as a color value of the three-dimensional space point obtained by means of fusion.

5. The method according to any one of claims 2 to 4, wherein the calculating respective depth confidence levels of the N-1 projected points corresponding to the first foreground pixel comprises:

determining, in an image area in which any projected point of the N-1 projected points is located, a maximum depth value and a minimum depth value in the image area;

obtaining a difference between the maximum depth value and the minimum depth value, wherein when the difference is greater than a preset difference threshold, the difference is set to be equal to the difference threshold; and scaling the difference by using a preset scale factor so that the difference is within a preset interval range, and using the scaled difference as a depth confidence level of the projected point.

6. The method according to any one of claims 1 to 5, wherein before the determining whether depth values of the foreground three-dimensional space point in respective coordinate systems of the N-1 image collection units are greater than or equal to depth values of the respective N-1 projected points corresponding to the first foreground pixel, the method further comprises:

determining whether there is a background pixel in the N-1 projected points corresponding to the first foreground pixel; and
when there is a background pixel in the N-1 projected points corresponding to the first foreground pixel, increasing a depth value of the first foreground pixel by a depth offset whose value is within a preset numerical value range, to update the depth value of the first foreground pixel, and performing the determining whether depth values of the foreground three-dimensional space point in respective coordinate systems of the N-1 image collection units are greater than or equal to depth values of the respective N-1 projected points corresponding to the first foreground pixel; or
when there is no background pixel in the N-1 projected points corresponding to the first foreground pixel, performing the determining whether depth values of the foreground three-dimensional space point in respective coordinate systems of the N-1 image collection units are greater than or equal to depth values of the respective N-1 projected points corresponding to the first foreground pixel.

7. The method according to any one of claims 1 to 6, wherein the obtaining a first foreground pixel of an $i^{th}$ depth image of the N depth images comprises: obtaining a first pixel in the $i^{th}$ depth image, and when a depth value of the first pixel is less than or equal to a preset depth threshold, and a color value of a pixel that corresponds to the first pixel and that is in an $i^{th}$ color image is not equal to a background color value of the $i^{th}$ color image, using the first pixel as the first foreground pixel, wherein the $i^{th}$ color image is an image collected by the $i^{th}$ image collection unit.

8. An apparatus for fusing a plurality of depth images, wherein the apparatus comprises:

an image obtaining unit, configured to obtain N depth images collected by N image collection units, wherein N≥2;
a foreground point obtaining unit, configured to obtain a first foreground pixel of an $i^{th}$ depth image of the N depth images obtained by the image obtaining unit, wherein i≥1 and i≤N, and the $i^{th}$ depth image is a depth image collected by an $i^{th}$ image collection unit of the N image collection units;
a projection unit, configured to: back-project the first foreground pixel obtained by the foreground point obtaining unit to three-dimensional space, to obtain a foreground three-dimensional space point, and project the foreground three-dimensional space point to imaging planes of N-1 image collection units of the N image collection units other than the $i^{th}$ collection unit, to obtain N-1 projected points that correspond to the first foreground pixel and that are in depth images respectively collected by the N-1 image collection units;
a determining unit, configured to determine whether depth values of the foreground three-dimensional space point obtained by the projection unit in respective coordinate systems of the N-1 image collection units are greater than or equal to depth values of the respective N-1 projected points corresponding to the first foreground pixel; and
a fusion unit, configured to: when the determining unit determines that the depth values of the foreground three-dimensional space point in the respective coordinate systems of the N-1 image collection units are greater than or equal to the depth values of the respective N-1 projected points corresponding to the first foreground pixel, obtain a three-dimensional point cloud by means of fusion and according to the first foreground pixel and the N-1 projected points corresponding to the first foreground pixel.

9. The apparatus according to claim 8, wherein the fusion unit comprises:

a calculation unit, configured to calculate respective depth confidence levels of the N-1 projected points corresponding to the first foreground pixel, wherein the depth confidence levels of the N-1 projected points corresponding to the first foreground pixel are respectively used to indicate depth value change degrees of pixels in image areas in which the N-1 projected points corresponding to the first foreground pixel are respectively located;
a determining unit, configured to determine, according to the respective depth confidence levels of the N-1 projected points corresponding to the first foreground pixel that are calculated by the calculation unit, a first reliable projected point whose depth confidence level meets a preset condition in the N-1 projected points corresponding to the first foreground pixel; and
a fusion subunit, configured to obtain the three-dimensional point cloud by means of fusion and according to the first foreground pixel and the first reliable projected point that is determined by the determining unit.

10. The apparatus according to claim 9, wherein the fusion subunit is configured to:

calculate an adjacent degree of the first reliable projected point, wherein the adjacent degree of the first reliable projected point is a difference between a depth value of the first reliable projected point and a depth value of the foreground three-dimensional space point, and the depth value of the foreground three-dimensional space point is a depth value of the foreground three-dimensional space point in a coordinate system of an image collection unit used to collect the first reliable projected point;
determine, according the first reliable projected point, a second reliable projected point whose adjacent degree meets a preset condition;
back-project the second reliable projected point to three-dimensional space, to obtain a three-dimensional space point corresponding to the second reliable projected point; and
use three-dimensional coordinate averages of three-dimensional coordinates of the three-dimensional space point corresponding to the second reliable projected point and three-dimensional coordinates of the foreground three-dimensional space point as three-dimensional coordinate values of a three-dimensional space point obtained by means of fusion, and use the three-dimensional space point obtained by means of fusion as a three-dimensional space point of the three-dimensional point cloud obtained by means of fusion, to obtain the three-dimensional point cloud by means of fusion.

11. The apparatus according to claim 10, wherein the fusion subunit is further configured to:

obtain N color images collected by the N image collection units, wherein the N color images are in a one-to-one correspondence to the N depth images;
obtain a second color value of a pixel that corresponds to the second reliable projected point and that is in the N color images, and a foreground color value of a pixel that corresponds to the first foreground pixel and that is in the N color images; and
use a color value average of the second color value and the foreground color value as a color value of the three-dimensional space point obtained by means of fusion.

12. The apparatus according to any one of claims 9 to 11, wherein the calculation unit is configured to:

determine, in an image area in which any projected point of the N-1 projected points is located, a maximum depth value and a minimum depth value in the image area;
obtain a difference between the maximum depth value and the minimum depth value, wherein when the difference is greater than a preset difference threshold, the difference is set to be equal to the difference threshold; and scale the difference by using a preset scale factor so that the difference is within a preset interval range, and use the scaled difference as a depth confidence level of the projected point.

13. The apparatus according to any one of claims 8 to 12, wherein the determining unit is further configured to:

before determining whether the depth values of the foreground three-dimensional space point in the respective coordinate systems of the N-1 image collection units are greater than or equal to the depth values of the respective N-1 projected points corresponding to the first foreground pixel, determine whether there is a background pixel in the N-1 projected points corresponding to the first foreground pixel; and
when there is a background pixel in the N-1 projected points corresponding to the first foreground pixel, increase a depth value of the first foreground pixel by a depth offset whose value is within a preset numerical value range, to update the depth value of the first foreground pixel, and perform the determining whether depth values of the foreground three-dimensional space point in respective coordinate systems of the N-1 image collection units are greater than or equal to depth values of the respective N-1 projected points corresponding to the first foreground pixel; or
when there is no background pixel in the N-1 projected points corresponding to the first foreground pixel, perform the determining whether depth values of the foreground three-dimensional space point in respective coordinate systems of the N-1 image collection units are greater than or equal to depth values of the respective N-1 projected points corresponding to the first foreground pixel.

14. The apparatus according to any one of claims 8 to 13, wherein the foreground point obtaining unit is configured to:

obtain a first pixel in the $i^{th}$ depth image, and when a depth value of the first pixel is less than or equal to a preset depth threshold, and a color value of a pixel that corresponds to the first pixel and that is in an $i^{th}$ color image is not equal to a background color value of the $i^{th}$ color image, use the first pixel as the first foreground pixel, wherein the $i^{th}$ color image is an image collected by the $i^{th}$ image collection unit.

**Patentansprüche**

1. Verfahren zum Fusionieren von mehreren Tiefenbildern, wobei das Verfahren Folgendes umfasst:

Erhalten von N Tiefenbildern, gesammelt durch N Bildsammeleinheiten, wobei N≥2;
Erhalten eines ersten Vordergrundpixels eines i-ten Tiefenbildes der N Tiefenbilder, wobei i≥1 und i≤N und das i-te Tiefenbild ein Tiefenbild ist, das durch eine i-te Bildsammeleinheit der N Bildsammeleinheiten gesammelt wurde;
Rückprojizieren des ersten Vordergrundpixels auf dreidimensionalen Raum, um einen dreidimensionalen Vordergrundraumpunkt zu erhalten, und Projizieren des dreidimensionalen Vordergrundraumpunkts auf Bildgebungsebenen von N-1 Bildsammeleinheiten der N Bildsammeleinheiten, die von der i-ten Sammeleinheit verschieden sind, um N-1 projizierte Punkte zu erhalten, die dem ersten Vordergrundpixel entsprechen und die in Tiefenbildern sind, die entsprechend durch die N-1 Bildsammeleinheiten gesammelt wurden;
Bestimmen, ob Tiefenwerte des dreidimensionalen Vordergrundraumpunkts in jeweiligen Koordinatensystemen der N-1 Bildsammeleinheiten größer oder gleich den Tiefenwerten der jeweiligen N-1 projizierten Punkte entsprechend dem ersten Vordergrundpixel sind; und
wenn die Tiefenwerte des dreidimensionalen Vordergrundraumpunkts in den jeweiligen Koordinatensystemen der N-1 Bildsammeleinheiten größer oder gleich den Tiefenwerten der jeweiligen N-1 projizierten Punkte entsprechend dem ersten Vordergrundpixel sind, Erhalten einer dreidimensionalen Punktwolke mittels Fusion und gemäß dem ersten Vordergrundpixel und den N-1 projizierten Punkten entsprechend dem ersten Vordergrundpixel.

2. Verfahren nach Anspruch 1, wobei das Erhalten der dreidimensionalen Punktwolke mittels Fusion und gemäß dem ersten Vordergrundpixel und den N-1 projizierten Punkten entsprechend dem ersten Vordergrundpixel Folgendes umfasst:

Berechnen der jeweiligen Tiefenkonfidenzniveaus der N-1 projizierten Punkte entsprechend dem ersten Vordergrundpixel, wobei die Tiefenkonfidenzniveaus der N-1 projizierten Punkte entsprechend dem ersten Vordergrundpixel jeweils verwendet werden, um Tiefenwertänderungsgrade von Pixeln in Bildbereichen anzuzeigen, in denen sich die N-1 projizierten Punkte entsprechend dem ersten Vordergrundpixel jeweils befinden;
Bestimmen, gemäß den jeweiligen Tiefenkonfidenzniveaus der N-1 projizierten Punkte entsprechend dem ersten Vordergrundpixel, eines ersten zuverlässigen projizierten Punkts, dessen Tiefenkonfidenzniveau eine vorgegebene Bedingung in den N-1 projizierten Punkte entsprechend dem ersten Vordergrundpixel erfüllt; und
Erhalten der dreidimensionalen Punktwolke mittels Fusion und und gemäß dem ersten Vordergrundpixel und dem ersten zuverlässigen projizierten Punkt.

3. Verfahren nach Anspruch 2, wobei das Erhalten der dreidimensionalen Punktwolke mittels Fusion und gemäß dem ersten Vordergrundpixel und dem ersten zuverlässigen projizierten Punkt Folgendes umfasst:

Berechnen eines Nachbarschaftsgrads des ersten zuverlässigen projizierten Punkts, wobei der Nachbarschaftsgrad des ersten zuverlässigen projizierten Punkts eine Differenz zwischen einem Tiefenwert des ersten zuverlässigen projizierten Punkts und einem Tiefenwert des dreidimensionalen Vordergrundraumpunkts ist und der Tiefenwert des dreidimensionalen Vordergrundraumpunkts ein Tiefenwert des dreidimensionalen Vordergrundraumpunkts in einem Koordinatensystem einer Bildsammeleinheit ist, die zum Sammeln des ersten zuverlässigen projizierten Punkts verwendet wird;
Bestimmen, gemäß dem ersten zuverlässigen projizierten Punkt, eines zweiten zuverlässigen projizierten Punkts, dessen Nachbarschaftsgrad eine vorgegebene Bedingung erfüllt; und
Rückprojizieren des zweiten zuverlässigen projizierten Punkts auf dreidimensionalen Raum, um einen dreidimensionalen Raumpunkt entsprechend dem zweiten zuverlässigen projizierten Punkt zu erhalten; und Verwenden von dreidimensionalen Koordinatendurchschnitten von dreidimensionalen Koordinaten des dreidimensionalen Raumpunkts entsprechend dem zweiten zuverlässigen projizierten Punkt und dreidimensionalen Koordinaten des dreidimensionalen Vordergrundraumpunkts als dreidimensionale Koordinatenwerte eines dreidimensionalen Raumpunkts, erhalten mittels Fusion, und Verwenden des mittels Fusion erhaltenen dreidimensionalen Raumpunkts als ein dreidimensionaler Raumpunkt der dreidimensionalen Punktwolke, die mittels Fusion erhalten wurde, um die dreidimensionale Punktwolke mittels Fusion zu erhalten.

4. Verfahren nach Anspruch 3, wobei das Verfahren ferner Folgendes umfasst:

Erhalten von N Farbbildern, erhalten durch die N Bildsammeleinheiten, wobei die N Farbbilder in einer Eins-zu-Eins-Entsprechung zu den N Tiefenbildern sind;
Erhalten eines zweiten Farbwerts eines Pixels, das dem zweiten zuverlässigen projizierten Punkt entspricht und das in den N Farbbildern ist, und eines Vordergrundfarbwerts eines Pixels, das dem ersten Vordergrundpixel entspricht und das in den N Farbbildern ist; und
Verwenden eines Farbwertdurchschnitts des zweiten Farbwerts und des Vordergrundfarbwerts als ein Farbwert des mittels Fusion erhaltenen dreidimensionalen Raumpunkts.

5. Verfahren nach einem der Ansprüche 2 bis 4, wobei das Berechnen der jeweiligen Tiefenkonfidenzniveaus der N-1 projizierten Punkte entsprechend dem ersten Vordergrundpixel Folgendes umfasst:

Bestimmen, in einem Bildbereich, in dem sich ein beliebiger projizierter Punkt der N-1 projizierten Punkte befindet, eines maximalen Tiefenwerts und eines minimalen Tiefenwerts im Bildbereich;
Erhalten einer Differenz zwischen dem maximalen Tiefenwert und dem minimalen Tiefenwert, wobei, wenn die Differenz größer als eine vorgegebene Differenzschwelle ist, die Differenz gleich der Differenzschwelle gesetzt wird; und
Skalieren der Differenz unter Verwendung eines vorgegebenen Skalierungsfaktors, sodass die Differenz innerhalb eines vorgegebenen Intervallbereichs liegt, und Verwenden der skalierten Differenz als ein Tiefenkonfidenzniveau des projizierten Punkts.

6. Verfahren nach einem der Ansprüche 1 bis 5, wobei vor dem Bestimmen, ob Tiefenwerte des dreidimensionalen Vordergrundraumpunkts in jeweiligen Koordinatensystemen der N-1 Bildsammeleinheiten größer oder gleich den Tiefenwerten der jeweiligen N-1 projizierten Punkte entsprechend dem ersten Vordergrundpixel sind, das Verfahren ferner Folgendes umfasst:

Bestimmen, ob es ein Hintergrundpixel in den N-1 projizierten Punkten entsprechend dem ersten Vordergrundpixel gibt; und
wenn es ein Hintergrundpixel in den N-1 projizierten Punkten entsprechend dem ersten Vordergrundpixel gibt, Erhöhen eines Tiefenwerts des ersten Vordergrundpixels um einen Tiefenversatz, dessen Wert innerhalb eines vorgegebenen numerischen Wertebereichs ist, um den Tiefenwert des ersten Vordergrundpixels zu aktualisieren, und Durchführen des Bestimmens, ob Tiefenwerte des dreidimensionalen Vordergrundraumpunkts in jeweiligen Koordinatensystemen der N-1 Bildsammeleinheiten größer oder gleich Tiefenwerten der jeweiligen N-1 projizierten Punkte entsprechend dem ersten Vordergrundpixel sind; oder
wenn es kein Hintergrundpixel in den N-1 projizierten Punkten entsprechend dem ersten Vordergrundpixel gibt, Durchführen des Bestimmens, ob Tiefenwerte des dreidimensionalen Vordergrundraumpunkts in jeweiligen Koordinatensystemen der N-1 Bildsammeleinheiten größer oder gleich den Tiefenwerten der jeweiligen N-1 projizierten Punkte entsprechend dem ersten Vordergrundpixel sind.

7. Verfahren nach einem der Ansprüche 1 bis 6, wobei das Erhalten eines ersten Vordergrundpixels eines i-ten Tiefenbilds der N Tiefenbilder Folgendes umfasst:
Erhalten eines ersten Pixels im i-ten Tiefenbild, und wenn ein Tiefenwert des ersten Pixels kleiner oder gleich einer vorgegebenen Tiefenschwelle ist und ein Farbwert eines Pixels, das dem ersten Pixel entspricht und das in einem i-ten Farbbild ist, nicht gleich einem Hintergrundfarbwert des i-ten Farbbilds ist, Verwenden des ersten Pixels als das erste Vordergrundpixel, wobei das i-te Farbbild ein Bild ist, das durch die i-te Bildsammeleinheit gesammelt wurde.

8. Vorrichtung zum Fusionieren von mehreren Tiefenbildern, wobei die Vorrichtung Folgendes umfasst:

eine Bilderhalteinheit, ausgelegt zum Erhalten von N Tiefenbildern, gesammelt durch N Bildsammeleinheiten, wobei N≥2;
eine Vordergrundpunkterhalteinheit, ausgelegt zum Erhalten eines ersten Vordergrundpixels eines i-ten Tiefenbildes der durch die Bilderhalteeinheit erhaltenen N Tiefenbilder, wobei i≥1 und i≤N, und das i-te Tiefenbild ist ein Tiefenbild, gesammelt durch eine i-te Bildsammeleinheit der N Bildsammeleinheiten;
eine Projektionseinheit, ausgelegt zum: Rückprojizieren des durch die Vordergrundpunkterhalteeinheit erhaltenen ersten Vordergrundpixels auf dreidimensionalen Raum, um einen dreidimensionalen Vordergrundraumpunkt zu erhalten, und Projizieren des dreidimensionalen Vordergrundraumpunkts auf Bildgebungsebenen von N-1 Bildsammeleinheiten der N Bildsammeleinheiten, die von der i-ten Sammeleinheit verschieden sind, um N-1 projizierte Punkte zu erhalten, die dem ersten Vordergrundpixel entsprechen und die in Tiefenbildern sind, die entsprechend durch die N-1 Bildsammeleinheiten gesammelt wurden;
eine Bestimmungseinheit, ausgelegt zum Bestimmen, ob Tiefenwerte des dreidimensionalen Vordergrundraumpunkts, erhalten durch die Projektionseinheit, in jeweiligen Koordinatensystemen der N-1 Bildsammeleinheiten größer oder gleich den Tiefenwerten der jeweiligen N-1 projizierten Punkte entsprechend dem ersten Vordergrundpixel sind; und
eine Fusionseinheit, ausgelegt zum: wenn die Bestimmungseinheit bestimmt, dass die Tiefenwerte des dreidimensionalen Vordergrundraumpunkts in den jeweiligen Koordinatensystemen der N-1 Bildsammeleinheiten größer oder gleich den Tiefenwerten der jeweiligen N-1 projizierten Punkte entsprechend dem ersten Vordergrundpixel sind, Erhalten einer dreidimensionalen Punktwolke mittels Fusion und gemäß dem ersten Vordergrundpixel und den N-1 projizierten Punkten entsprechend dem ersten Vordergrundpixel.

9. Vorrichtung nach Anspruch 8, wobei die Fusionseinheit ferner Folgendes umfasst:

    eine Berechnungseinheit, ausgelegt zum Berechnen der jeweiligen Tiefenkonfidenzniveaus der N-1 projizierten Punkte entsprechend dem ersten Vordergrundpixel, wobei die Tiefenkonfidenzniveaus der N-1 projizierten Punkte entsprechend dem ersten Vordergrundpixel jeweils verwendet werden, um Tiefenwertänderungsgrade von Pixeln in Bildbereichen anzuzeigen, in denen sich die N-1 projizierten Punkte entsprechend dem ersten Vordergrundpixel jeweils befinden;
    eine Bestimmungseinheit, ausgelegt zum Bestimmen, gemäß den jeweiligen Tiefenkonfidenzniveaus der N-1 projizierten Punkte entsprechend dem ersten Vordergrundpixel, die durch die Berechnungseinheit berechnet wurden, eines ersten zuverlässigen projizierten Punkts, dessen Tiefenkonfidenzniveau eine vorgegebene Bedingung in den N-1 projizierten Punkte entsprechend dem ersten Vordergrundpixel erfüllt; und
    eine Fusionsuntereinheit, ausgelegt zum Erhalten der dreidimensionalen Punktwolke mittels Fusion und und gemäß dem ersten Vordergrundpixel und dem ersten zuverlässigen projizierten Punkt, der durch die Bestimmungseinheit bestimmt wurde.

10. Vorrichtung nach Anspruch 9, wobei die Fusionsuntereinheit ausgelegt ist zum:

    Berechnen eines Nachbarschaftsgrads des ersten zuverlässigen projizierten Punkts, wobei der Nachbarschaftsgrad des ersten zuverlässigen projizierten Punkts eine Differenz zwischen einem Tiefenwert des ersten zuverlässigen projizierten Punkts und einem Tiefenwert des dreidimensionalen Vordergrundraumpunkts ist und der Tiefenwert des dreidimensionalen Vordergrundraumpunkts ein Tiefenwert des dreidimensionalen Vordergrundraumpunkts in einem Koordinatensystem einer Bildsammeleinheit ist, die zum Sammeln des ersten zuverlässigen projizierten Punkts verwendet wird;
    Bestimmen, gemäß dem ersten zuverlässigen projizierten Punkt, eines zweiten zuverlässigen projizierten Punkts, dessen Nachbarschaftsgrad eine vorgegebene Bedingung erfüllt;
    Rückprojizieren des zweiten zuverlässigen projizierten Punkts auf dreidimensionalen Raum, um einen dreidimensionalen Raumpunkt entsprechend dem zweiten zuverlässigen projizierten Punkt zu erhalten; und
    Verwenden von dreidimensionalen Koordinatendurchschnitten von dreidimensionalen Koordinaten des dreidimensionalen Raumpunkts entsprechend dem zweiten zuverlässigen projizierten Punkt und dreidimensionalen Koordinaten des dreidimensionalen Vordergrundraumpunkts als dreidimensionale Koordinatenwerte eines dreidimensionalen Raumpunkts, erhalten mittels Fusion, und Verwenden des mittels Fusion erhaltenen dreidimensionalen Raumpunkts als ein dreidimensionaler Raumpunkt der dreidimensionalen Punktwolke, die mittels Fusion erhalten wurde, um die dreidimensionale Punktwolke mittels Fusion zu erhalten.

11. Vorrichtung nach Anspruch 10, wobei die Fusionsuntereinheit ferner ausgelegt ist zum:

    Erhalten von N Farbbildern, erhalten durch die N Bildsammeleinheiten, wobei die N Farbbilder in einer Eins-zu-Eins-Entsprechung zu den N Tiefenbildern sind;
    Erhalten eines zweiten Farbwerts eines Pixels, das dem zweiten zuverlässigen projizierten Punkt entspricht und das in den N Farbbildern ist, und eines Vordergrundfarbwerts eines Pixels, das dem ersten Vordergrundpixel entspricht und das in den N Farbbildern ist; und
    Verwenden eines Farbwertdurchschnitts des zweiten Farbwerts und des Vordergrundfarbwerts als ein Farbwert des mittels Fusion erhaltenen dreidimensionalen Raumpunkts.

**12.** Vorrichtung nach einem der Ansprüche 9 bis 11, wobei die Berechnungseinheit ausgelegt ist zum:

Bestimmen, in einem Bildbereich, in dem sich ein beliebiger projizierter Punkt der N-1 projizierten Punkte befindet, eines maximalen Tiefenwerts und eines minimalen Tiefenwerts im Bildbereich;
Erhalten einer Differenz zwischen dem maximalen Tiefenwert und dem minimalen Tiefenwert, wobei, wenn die Differenz größer als eine vorgegebene Differenzschwelle ist, die Differenz gleich der Differenzschwelle gesetzt wird; und Skalieren der Differenz unter Verwendung eines vorgegebenen Skalierungsfaktors, sodass die Differenz innerhalb eines vorgegebenen Intervallbereichs liegt, und Verwenden der skalierten Differenz als ein Tiefenkonfidenzniveau des projizierten Punkts.

**13.** Vorrichtung nach einem der Ansprüche 8 bis 12, wobei die Bestimmungseinheit ferner ausgelegt ist zum:

vor dem Bestimmen, ob die Tiefenwerte des dreidimensionalen Vordergrundraumpunkts in den jeweiligen Koordinatensystemen der N-1 Bildsammeleinheiten größer oder gleich den Tiefenwerten der jeweiligen N-1 projizierten Punkte entsprechend dem ersten Vordergrundpixel sind, Bestimmen, ob es ein Hintergrundpixel in den N-1 projizierten Punkten entsprechend dem ersten Vordergrundpixel gibt; und wenn es ein Hintergrundpixel in den N-1 projizierten Punkten entsprechend dem ersten Vordergrundpixel gibt, Erhöhen eines Tiefenwerts des ersten Vordergrundpixels um einen Tiefenversatz, dessen Wert innerhalb eines vorgegebenen numerischen Wertebereichs ist, um den Tiefenwert des ersten Vordergrundpixels zu aktualisieren, und Durchführen des Bestimmens, ob Tiefenwerte des dreidimensionalen Vordergrundraumpunkts in jeweiligen Koordinatensystemen der N-1 Bildsammeleinheiten größer oder gleich Tiefenwerten der jeweiligen N-1 projizierten Punkte entsprechend dem ersten Vordergrundpixel sind; oder wenn es kein Hintergrundpixel in den N-1 projizierten Punkten entsprechend dem ersten Vordergrundpixel gibt, Durchführen des Bestimmens, ob Tiefenwerte des dreidimensionalen Vordergrundraumpunkts in jeweiligen Koordinatensystemen der N-1 Bildsammeleinheiten größer oder gleich den Tiefenwerten der jeweiligen N-1 projizierten Punkte entsprechend dem ersten Vordergrundpixel sind.

**14.** Vorrichtung nach einem der Ansprüche 8 bis 13, wobei die Vordergrundpunkterhalteeinheit ausgelegt ist zum:

Erhalten eines ersten Pixels im i-ten Tiefenbild, und wenn ein Tiefenwert des ersten Pixels kleiner oder gleich einer vorgegebenen Tiefenschwelle ist und ein Farbwert eines Pixels, das dem ersten Pixel entspricht und das in einem i-ten Farbbild ist, nicht gleich einem Hintergrundfarbwert des i-ten Farbbilds ist, Verwenden des ersten Pixels als das erste Vordergrundpixel, wobei das i-te Farbbild ein Bild ist, das durch die i-te Bildsammeleinheit gesammelt wurde.

## Revendications

**1.** Procédé de fusion d'une pluralité d'images de profondeur, le procédé comprenant :
l'obtention de N images de profondeur collectées par N unités de collecte d'images, où $N \geq 2$ :

l'obtention d'un premier pixel de premier plan d'une $i^{ème}$ image de profondeur des N images de profondeur, où $i \geq 1$ et $i \leq N$, et la $i^{ème}$ image de profondeur est une image de profondeur collectée par une $i^{ème}$ unité de collecte d'images des N unités de collecte d'images ;
la rétroprojection du premier pixel de premier plan dans un espace tridimensionnel, pour obtenir un point d'espace tridimensionnel de premier plan, et la projection du point d'espace tridimensionnel de premier plan dans des plans d'imagerie de N-1 unités de collecte d'images des N unités de collecte d'images autres que la $i^{ème}$ unité de collection, pour obtenir N-1 points de projection qui correspondent au premier pixel de premier plan et qui sont respectivement dans des images de profondeur collectées par les N-1 unités de collecte d'images ;
la détermination si les valeurs de profondeur du point d'espace tridimensionnel de premier plan dans les systèmes de coordonnées respectifs des N-1 unités de collecte d'images sont supérieures ou égales aux valeurs de profondeur des N-1 points de projection respectifs correspondant au premier pixel de premier plan ; et
lorsque les valeurs de profondeur du point d'espace tridimensionnel de premier plan dans les systèmes de coordonnées respectifs des N-1 unités de collecte d'images sont supérieures ou égales aux valeurs de profondeur des N-1 points de projection respectifs correspondant au premier pixel de premier plan, l'obtention d'un nuage de points tridimensionnel par fusion et en fonction du premier pixel de premier plan et des N-1 points de projection correspondant au premier pixel de premier plan.

**2.** Procédé selon la revendication 1, l'obtention d'un nuage de points tridimensionnel par fusion et en fonction du premier pixel de premier plan et des N-1 points de projection correspondant au premier pixel de premier plan comprenant :

le calcul des niveaux de confiance de profondeur respectifs des N-1 points de projection correspondant au premier pixel de premier plan, les niveaux de confiance de profondeur des N-1 points de projection correspondant au premier pixel de premier plan étant respectivement utilisés pour indiquer les degrés de changement de valeur de profondeur des pixels dans les zones d'image dans lesquelles les N-1 points de projection correspondant au premier pixel de premier plan sont respectivement situés ;

la détermination, en fonction des niveaux de confiance de profondeur respectifs des N-1 points de projection correspondant au premier pixel de premier plan, d'un premier point de projection fiable dont le niveau de confiance de profondeur rencontre une condition prédéfinie dans les N-1 points de projection correspondant au premier pixel de premier plan ; et

l'obtention du nuage de points tridimensionnel par fusion et en fonction du premier pixel de premier plan et du premier point de projection fiable.

**3.** Procédé selon la revendication 2, l'obtention du nuage de points tridimensionnel par fusion et en fonction du premier pixel de premier plan et du premier point de projection fiable comprenant :

le calcul d'un degré adjacent du premier point de projection fiable, dans lequel le degré adjacent du premier point de projection fiable est une différence entre une valeur de profondeur du premier point de projection fiable et une valeur de profondeur du point d'espace tridimensionnel de premier plan, et la valeur de profondeur du point d'espace tridimensionnel de premier plan est une valeur de profondeur du point d'espace tridimensionnel de premier plan dans un système de coordonnées d'une unité de collecte d'images utilisée pour collecter le premier point de projection fiable ;

la détermination, en fonction du premier point de projection fiable, d'un deuxième point de projection fiable dont le degré adjacent répond à une condition prédéfinie ; et

la rétroprojection du deuxième point de projection fiable dans l'espace tridimensionnel, pour obtenir un point d'espace tridimensionnel correspondant au deuxième point de projection fiable ; et

l'utilisation de moyennes de coordonnées tridimensionnelles de coordonnées tridimensionnelles du point d'espace tridimensionnel correspondant au deuxième point de projection fiable et de coordonnées tridimensionnelles du point d'espace tridimensionnel de premier plan comme valeurs de coordonnées tridimensionnelles d'un point d'espace tridimensionnel obtenu par fusion, et l'utilisation du point d'espace tridimensionnel obtenu par fusion comme un point d'espace tridimensionnel du nuage tridimensionnel obtenu par fusion pour obtenir le nuage tridimensionnel de points par fusion.

**4.** Procédé selon la revendication 3, le procédé comprenant en outre :

l'obtention de N images en couleur collectées par les N unités de collecte d'images, les N images en couleur étant en correspondance une à une avec les N images de profondeur ;

l'obtention d'une deuxième valeur de couleur d'un pixel qui correspond au deuxième point de projection fiable et qui est dans les N images en couleur, et d'une valeur de couleur de premier plan d'un pixel qui correspond au premier pixel de premier plan et qui est dans les N images en couleur ; et

l'utilisation d'une moyenne des valeurs de couleur de la deuxième valeur de couleur et de la valeur de couleur de premier plan comme valeur de couleur du point d'espace tridimensionnel obtenu par fusion.

**5.** Procédé selon l'une quelconque des revendications 2 à 4, le calcul des niveaux de confiance de profondeur respectifs des N-1 points de projection correspondant au premier pixel de premier plan comprenant :

la détermination, dans une zone d'image dans laquelle se trouve un point de projection quelconque des N-1 points de projection, d'une valeur de profondeur maximale et d'une valeur de profondeur minimale dans la zone d'image ;

l'obtention d'une différence entre la valeur de profondeur maximale et la valeur de profondeur minimale, lorsque la différence est supérieure à un seuil de différence prédéfini, la différence étant réglée pour être égale au seuil de différence ; et

la mise à l'échelle de la différence en utilisant un facteur d'échelle prédéfini de sorte que la différence est à l'intérieur d'une plage d'intervalles prédéfinis, et en utilisant la différence mise à l'échelle comme un niveau de confiance de profondeur du point de projection.

**6.** Procédé selon l'une quelconque des revendications 1 à 5, avant de déterminer si les valeurs de profondeur du point d'espace tridimensionnel de premier plan dans les systèmes de coordonnées respectifs des N-1 unités de collecte d'images sont supérieures ou égales aux valeurs de profondeur des N-1 points de projection respectifs correspondant au premier pixel de premier plan, le procédé comprenant en outre :

la détermination s'il y a un pixel d'arrière-plan dans les N-1 points de projection correspondant au premier pixel de premier plan ; et

lorsqu'il y a un pixel d'arrière-plan dans les N-1 points de projection correspondant au premier pixel de premier plan, l'augmentation d'une valeur de profondeur du premier pixel de premier plan d'un décalage de profondeur dont la valeur est dans une plage de valeurs numériques prédéfinies, pour mettre à jour la valeur de profondeur du premier pixel de premier plan, et la réalisation de la détermination si les valeurs de profondeur du point d'espace tridimensionnel de premier plan dans les systèmes respectifs de coordonnées des N-1 unités de collecte d'images sont supérieures ou égales aux valeurs de profondeur des N-1 points de projection respectifs correspondant au premier pixel de premier plan ; ou

lorsqu'il n'y a pas de pixel d'arrière-plan dans les N-1 points de projection correspondant au premier pixel de premier plan, la réalisation de la détermination si les valeurs de profondeur du point d'espace tridimensionnel de premier plan dans les systèmes de coordonnées respectifs des N-1 unités de collecte d'images sont supérieures ou égales aux valeurs de profondeur des N-1 points de projection respectifs correspondant au premier pixel de premier plan.

7. Procédé selon l'une quelconque des revendications 1 à 6, l'obtention d'un premier pixel de premier plan d'une i$^{ème}$ image de profondeur des N images de profondeur comprenant :

l'obtention d'un premier pixel dans l'i$^{ème}$ image de profondeur, et lorsqu'une valeur de profondeur du premier pixel est inférieure ou égale à un seuil de profondeur prédéfini, et qu'une valeur de couleur d'un pixel qui correspond au premier pixel et qui est dans une i$^{ème}$ image en couleur n'est pas égale à une valeur de couleur d'arrière-plan de la i$^{ème}$ image en couleur, l'utilisation du premier pixel de premier plan, où la i$^{ème}$ image en couleur est une image collectée par la i$^{ème}$ unité de collection d'image.

8. Appareil pour fusionner une pluralité d'images de profondeur, dans lequel l'appareil comprend : une unité d'obtention d'image, configurée pour obtenir N images de profondeur collectées par N unités de collecte d'images, où N≥2 ;

une unité d'obtention de point de premier plan, configurée pour obtenir un premier pixel de premier plan d'une i$^{ème}$ image de profondeur des N images de profondeur obtenues par l'unité d'obtention d'image, où i≥1 et i≤N, et la i$^{ème}$ image de profondeur est une image de profondeur collectée par une i$^{ème}$ unité de collecte d'images des N unités de collecte d'images ;

une unité de projection, configurée pour : rétroprojeter le premier pixel de premier plan obtenu par l'unité d'obtention de point de premier plan dans un espace tridimensionnel, pour obtenir un point d'espace tridimensionnel de premier plan, et projeter le point d'espace tridimensionnel de premier plan dans des plans d'imagerie de N-1 unités de collecte d'images des N unités de collecte d'images autres que la i$^{ème}$ unité de collecte, pour obtenir N-1 points de projection qui correspondent au premier pixel de premier plan et qui sont respectivement dans des images de profondeur collectées par les N-1 unités de collecte d'images ;

une unité de détermination, configurée pour déterminer si les valeurs de profondeur du point d'espace tridimensionnel de premier plan obtenues par l'unité de projection dans les systèmes de coordonnées respectifs des N-1 unités de collecte d'images sont supérieures ou égales aux valeurs de profondeur des N-1 points de projection respectifs correspondant au premier pixel de premier plan ; et

une unité de fusion, configurée pour : lorsque l'unité de détermination détermine que les valeurs de profondeur du point d'espace tridimensionnel de premier plan dans les systèmes de coordonnées respectifs des N-1 unités de collecte d'images sont supérieures ou égales aux valeurs de profondeur des N-1 points de projection respectifs correspondant au premier pixel de premier plan, obtenir un nuage de points tridimensionnel par fusion et en fonction du premier pixel de premier plan et des N-1 points de projection correspondant au premier pixel de premier plan.

9. Appareil selon la revendication 8, l'unité de fusion comprenant :

une unité de calcul, configurée pour calculer les niveaux de confiance de profondeur respectifs des N-1 points de projection correspondant au premier pixel de premier plan, les niveaux de confiance de profondeur des N-1 points de projection correspondant au premier pixel de premier plan étant respectivement utilisés pour indiquer les degrés de changement de valeur de profondeur des pixels dans les zones d'image dans lesquelles les N-1 points de projection correspondant au premier pixel de premier plan sont respectivement situés ;

une unité de détermination, configurée pour déterminer, en fonction des niveaux de confiance de profondeur respectifs des N-1 points de projection correspondant au premier pixel de premier plan qui sont calculés par l'unité de calcul, un premier point de projection fiable dont le niveau de confiance de profondeur remplit une condition prédéfinie dans les N-1 points de projection correspondant au premier pixel de premier plan ; et

une sous-unité de fusion, configurée pour obtenir le nuage de points tridimensionnel par fusion et en fonction du premier pixel de premier plan et du premier point de projection fiable qui est déterminé par l'unité de détermination.

**10.** Appareil selon la revendication 9, la sous-unité de fusion étant configurée pour :

calculer un degré adjacent du premier point de projection fiable, le degré adjacent du premier point de projection fiable étant une différence entre une valeur de profondeur du premier point de projection fiable et une valeur de profondeur du point d'espace tridimensionnel de premier plan, et la valeur de profondeur du point d'espace tridimensionnel de premier plan étant une valeur de profondeur du point d'espace tridimensionnel de premier plan dans un système de coordonnées d'une unité de collecte d'images utilisée pour collecter le premier point de projection fiable ;

déterminer, en fonction du premier point de projection fiable, un deuxième point de projection fiable dont le degré adjacent répond à une condition prédéfinie ;

rétroprojeter le deuxième point de projection fiable dans l'espace tridimensionnel, pour obtenir un point d'espace tridimensionnel correspondant au deuxième point de projection fiable ; et

utiliser des moyennes de coordonnées tridimensionnelles de coordonnées tridimensionnelles du point d'espace tridimensionnel correspondant au deuxième point de projection fiable et des coordonnées tridimensionnelles du point d'espace tridimensionnel de premier plan comme valeurs de coordonnées tridimensionnelles d'un point d'espace tridimensionnel obtenu par fusion, et utiliser le point d'espace tridimensionnel obtenu par fusion comme un point d'espace tridimensionnel du nuage tridimensionnel obtenu par fusion, pour obtenir le nuage tridimensionnel de points par fusion.

**11.** Appareil selon la revendication 10, la sous-unité de fusion étant en outre configurée pour :

obtenir N images en couleur collectées par les N unités de collecte d'images, les N images en couleur étant en correspondance une à une avec les N images de profondeur ;

obtenir une deuxième valeur de couleur d'un pixel qui correspond au deuxième point de projection fiable et qui est dans les N images en couleur, et une valeur de couleur de premier plan d'un pixel qui correspond au premier pixel de premier plan et qui est dans les N images en couleur ; et

utiliser une moyenne des valeurs de couleur de la deuxième valeur de couleur et de la valeur de couleur de premier plan comme valeur de couleur du point d'espace tridimensionnel obtenu par fusion.

**12.** Appareil selon l'une quelconque des revendications 9 à 11, l'unité de calcul étant configurée pour :

déterminer, dans une zone d'image dans laquelle se trouve le point de projection des N-1 points de projection, une valeur de profondeur maximale et une valeur de profondeur minimale dans la zone d'image ;

obtenir une différence entre la valeur de profondeur maximale et la valeur de profondeur minimale, lorsque la différence est supérieure à un seuil de différence prédéfini, la différence étant réglée pour être égale au seuil de différence ; et mettre à l'échelle la différence en utilisant un facteur d'échelle prédéfini de sorte que la différence est à l'intérieur d'une plage d'intervalles prédéfinis, et utiliser la différence mise à l'échelle comme niveau de confiance de profondeur du point de projection.

**13.** Appareil selon l'une quelconque des revendications 8 à 12, l'unité de détermination étant en outre configurée pour :

avant de déterminer si les valeurs de profondeur du point d'espace tridimensionnel de premier plan dans les systèmes de coordonnées respectifs des N-1 unités de collecte d'images sont supérieures ou égales aux valeurs de profondeur des N-1 points de projection respectifs correspondant au premier pixel de premier plan, déterminer s'il y a un pixel d'arrière-plan dans les N-1 points de projection correspondant au premier pixel de premier plan ; et

lorsqu'il y a un pixel d'arrière-plan dans les N-1 points de projection correspondant au premier pixel de premier plan, augmenter une valeur de profondeur du premier pixel de premier plan d'un décalage de profondeur dont la valeur est dans une plage de valeurs numériques prédéfinies, pour mettre à jour la valeur de profondeur du premier pixel de premier plan, et réaliser la détermination si les valeurs de profondeur du point d'espace tridimensionnel de premier plan, dans les systèmes de coordonnées respectifs des N-1 unités de collecte d'image sont supérieures ou égales aux valeurs de profondeur des N-1 points de projection respectifs correspondants au premier pixel de premier plans ; ou

lorsqu'il n'y a pas de pixel d'arrière-plan dans les N-1 points de projection correspondant au premier pixel de premier plan, déterminer si les valeurs de profondeur du point d'espace tridimensionnel de premier plan dans les systèmes de coordonnées respectifs des N-1 unités de collecte d'images sont supérieures ou égales aux valeurs de profondeur des N-1 points de projection respectifs correspondant au premier pixel de premier plan.

**14.** Appareil selon l'une quelconque des revendications 8 à 13, l'unité d'obtention du point de premier plan étant configurée pour :

obtenir un premier pixel dans l'$i^{ème}$ image de profondeur, et lorsqu'une valeur de profondeur du premier pixel est inférieure ou égale à un seuil de profondeur prédéfini, et qu'une valeur de couleur d'un pixel qui correspond au premier pixel et qui est dans une $i^{ème}$ image en couleur n'est pas égale à une valeur de couleur d'arrière-plan de la $i^{ème}$ image en couleur, utiliser le premier pixel comme premier pixel de premier plan, la $i^{ème}$ image en couleur étant une image collectée par la $i^{ème}$ unité de collecte d'image.

FIG. 1

FIG. 2

Obtain N depth images collected by N image collection units — 301

Obtain a first foreground pixel of an i$^{th}$ depth image of the N depth images — 302

Obtain N−1 projected points that correspond to the first foreground pixel and that are in depth images respectively collected by N−1 image collection units — 303

Determine whether depth values of a foreground three-dimensional space point in respective coordinate systems of the N−1 image collection units are greater than or equal to depth values of the respective N−1 projected points corresponding to the first foreground pixel — 304

Obtain a three-dimensional point cloud by means of fusion and according to the first foreground pixel and the N−1 projected points corresponding to the first foreground pixel — 305

FIG. 3

Calculate respective depth confidence levels of N–1 projected points corresponding to a first foreground pixel

401

Determine, according to the respective depth confidence levels of the N–1 projected points corresponding to the first foreground pixel, a first reliable projected point whose depth confidence level meets a preset condition in the N–1 projected points corresponding to the first foreground pixel

402

Obtain a three-dimensional point cloud by means of fusion and according to the first foreground pixel and the first reliable projected point

403

FIG. 4

```
┌─────────────────────────────────────────────────────────────┐
│                                                               │  501
│   Calculate an adjacent degree of a first reliable projected  │
│                         point                                 │
│                                                               │
└─────────────────────────────────────────────────────────────┘
                              │
                              ▼
┌─────────────────────────────────────────────────────────────┐
│                                                               │  502
│  Determine, in the first reliable projected point, a second   │
│  reliable projected point whose adjacent degree meets a       │
│                  preset condition                             │
└─────────────────────────────────────────────────────────────┘
                              │
                              ▼
┌─────────────────────────────────────────────────────────────┐
│                                                               │  503
│  Back-project the second reliable projected point to three-   │
│  dimensional space, to obtain a three-dimensional space       │
│  point corresponding to the second reliable projected point   │
└─────────────────────────────────────────────────────────────┘
                              │
                              ▼
┌─────────────────────────────────────────────────────────────┐
│  Use three-dimensional coordinate averages of three-          │  504
│  dimensional coordinates of the three-dimensional space       │
│  point corresponding to the second reliable projected point   │
│  and three-dimensional coordinates of a foreground three-     │
│  dimensional space point as three-dimensional coordinate      │
│  values of a three-dimensional space point obtained by        │
│  means of fusion, and use the three-dimensional space point   │
│  obtained by means of fusion as a three-dimensional space     │
│  point of a three-dimensional point cloud obtained by means   │
│                       of fusion                               │
└─────────────────────────────────────────────────────────────┘
```

FIG. 5

Start

601

Determine whether
there is a background pixel in N–1 projected
points corresponding to a first
foreground pixel

Yes

No

602

Increase a depth value of the first foreground pixel by a depth offset whose
value is within a preset numerical value range, to update the depth value of the
first foreground pixel, and perform determining whether depth values of a
foreground three-dimensional space point in respective coordinate systems of
N–1 image collection units are greater than or equal to depth values of the
respective N–1 projected points corresponding to the first foreground pixel

603

Perform the determining whether depth values of a foreground
three-dimensional space point in respective coordinate systems
of N–1 image collection units are greater than or equal to depth
values of the respective N–1 projected points corresponding to
the first foreground pixel

FIG. 6

FIG. 7

FIG. 8

FIG. 9a

FIG. 9b

FIG. 9c

FIG. 10a

FIG. 10b

```
┌─────────────────────────────┐  1101
│    Image obtaining unit      │
└─────────────────────────────┘
              │
              ▼
┌─────────────────────────────┐  1102
│  Foreground point obtaining  │
│            unit              │
└─────────────────────────────┘
              │
              ▼
┌─────────────────────────────┐  1103
│       Projection unit        │
└─────────────────────────────┘
              │
              ▼
┌─────────────────────────────┐  1104
│      Determining unit        │
└─────────────────────────────┘
              │
              ▼
┌─────────────────────────────┐  1105
│        Fusion unit           │
└─────────────────────────────┘
```

FIG. 11

1201

1201

1201

1201

1201

Processor

1202

FIG. 12